# EUROPEAN PATENT APPLICATION

(11) **EP 4 694 383 A1**
(43) Date of publication of application: **11.02.2026**
(21) Application number: 24933320.4
(22) Date of filing: 02.04.2024
(51) Int. Cl.: H04W 52/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN)
(74) Representative: Aldridge, Henry Alexander
(86) International application number: PCT/CN2024/085650
(87) International publication number: WO 2025/208361

(57) **Abstract**

Provided are a method for wireless communication, and a communication devices. The method for wireless communication includes: transmitting, by a first device, a first frame to a second device, where the first frame comprises first information, the first information is associated with a first operating mode of the first device, and the first operating mode allows the first device, in an awake state, to perform communication in different capability modes.

## Description

### TECHNICAL FIELD

Embodiments of the present disclosure relate to the technical field of communications, and more particularly to, methods for wireless communication, and communication devices.

### BACKGROUND

In order to reduce power consumption of a communication device (such as, an access point, a station), a power save mode is introduced in the related technologies. However, the current power save mode is inflexible in operation, and the better power save effect cannot be achieved while adapting communication capabilities (e.g., a frame switching capability).

### SUMMARY

The present disclosure provides methods for wireless communication, and communication devices. Various aspects of the present disclosure are described below.

In a first aspect, there is provided a method for wireless communication, which includes the following operation. A first device transmits a first frame to a second device, where the first frame includes first information, the first information is associated with a first operating mode of the first device, and the first operating mode allows the first device, in an awake state, to perform communication in different capability modes.

In a second aspect, there is provided a method for wireless communication, which includes the following operation. A second device receives a first frame from a first device, where the first frame includes first information, the first information is associated with a first operating mode of the first device, and the first operating mode allows the first device, in an awake state, to perform communication in different capability modes.

In a third aspect, there is provided a communication device. The communication device is a first device and includes a first transmission module. The first transmission module is configured to transmit a first frame to a second device, where the first frame includes first information, the first information is associated with a first operating mode of the first device, and the first operating mode allows the first device, in an awake state, to perform communication in different capability modes.

In a fourth aspect, there is provided a communication device. The communication device is a second device and includes a first receiving module. The first receiving module is configured to receive a first frame from a first device, where the first frame includes first information, the first information is associated with a first operating mode of the first device, and the first operating mode allows the first device, in an awake state, to perform communication in different capability modes.

In a fifth aspect, there is provided a communication device, which includes a transceiver, a processor and a memory. The memory is configured to store one or more computer programs, and the processor is configured to call the computer program(s) in the memory, to enable the communication device to perform some or all of the operations in each of the methods of the aforementioned various aspects.

In a sixth aspect, an embodiment of the present disclosure provides a communication system, which includes the aforementioned communication device. In another possible design, the system may further include other devices that interact with the communication device in the solution provided by the embodiments of the present disclosure.

In a seventh aspect, an embodiment of the present disclosure provides a computer-readable storage medium, which is configured to store a computer program. The computer program causes the communication device to perform some or all of the operations in each of the methods of the aforementioned various aspects.

In an eighth aspect, an embodiment of the present disclosure provides a computer program product, which includes a non-transitory computer-readable storage medium used to store a computer program. The computer program is operable to enable the communication device to perform some or all of the operations in each of the methods of the aforementioned various aspects. In some implementations, the computer program product may be a software installation package.

In a ninth aspect, an embodiment of the present disclosure provides a chip, which includes a memory and a processor. The processor is configured to call and run a computer program from the memory, to implement some or all of the operations in each of the methods of the aforementioned various aspects.

According to the embodiments of the present disclosure, the first operating mode is introduced, and the first operating mode allows the first device, in the awake state, to perform the communication in different capability modes. In such way, the first device in the awake state may select different capability modes according to different situations, to perform the communication, which is beneficial to achieving the better power save effect while ensuring the communication capabilities.

### BRIEF DESCRIPTION OF THE DRAWINGS

FIG. 1 is an example diagram of a system architecture of a wireless communication system to which an embodiment of the present disclosure is applied.
FIG. 2 is a flowchart of a method for wireless communication according to an embodiment of the present disclosure.
FIG. 3 is an example diagram of a negotiated control-based first operating mode according to an embodiment of the present disclosure.
FIG. 4 is another example diagram of a negotiated control-based first operating mode according to an embodiment of the present disclosure.
FIG. 5 is another flowchart of a method for wireless communication according to an embodiment of the present disclosure.
FIG. 6 is an example diagram of a format of a first subfield.
FIG. 7 is an example diagram of a format of a second subfield.
FIG. 8 is an example diagram of a format of a capability adaptation power save control subfield.
FIG. 9 is an example diagram of a format of a capability adaptation power save latency parameter subfield.
FIG. 10 is an example diagram of a format of a low capability operating mode parameter subfield.
FIG. 11 is an example diagram of a format of a high capability operating mode parameter subfield.
FIG. 12 is an example diagram of a format of a third subfield.
FIG. 13 is an example diagram of a format of a target capability mode operating parameter subfield.
FIG. 14 is an example diagram of a control frame with dynamic control for a capability adaptation power save mode.
FIG. 15 is an example diagram of a format of a capability adaptation power save mode switching response subfield.
FIG. 16 is a schematic structural diagram of a communication device according to an embodiment of the present disclosure.
FIG. 17 is another schematic structural diagram of a communication device according to an embodiment of the present disclosure.
FIG. 18 is a schematic structural diagram of a device for communication according to an embodiment of the present disclosure.

### DETAILED DESCRIPTION

Hereinafter, technical solutions in the present disclosure are described with reference to the accompanying drawings.

### Communication system

The technical solutions of the embodiments of the present disclosure may be applied to various communication systems, such as, Wireless Local Area Networks (WLAN), wireless fidelity (WiFi), High Performance Radio Local Area Networks (HIPELAN), Wide Area Networks (WAN), Cellular networks or other communication systems, etc. For another example, the technical solutions provided by the embodiments of the present disclosure may be applied to a communication system adopting the standard 802.11. Exemplarily, the standard 802.11 includes, but is not limited to, the standard 802.11ax, the standard 802.11be, the next generation standard 802.11, etc.

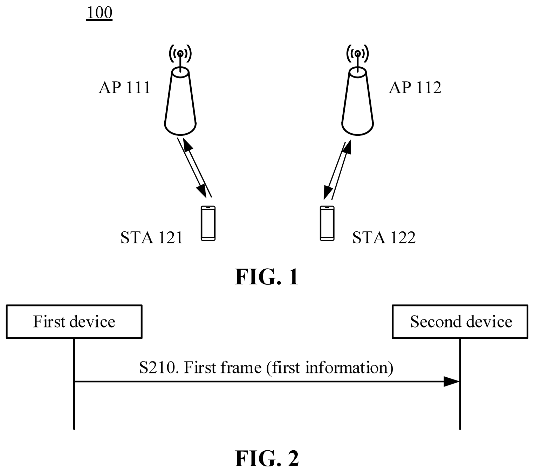

FIG. 1 illustrates a schematic diagram of a communication system to which an embodiment of the present disclosure is applied. With reference to FIG. 1, a communication device in the communication system 100 may include an Access Point (AP) 111, an AP 112, a station (STA) 121 and a STA 122. Herein, the STA 121 may access a network through the AP 111, and the STA 122 may access the network through the AP 112.

In some implementations, the STA may set up an association with one or more APs, after which the STA may communicate with the AP(s) having the association with the STA. With reference to FIG. 1, the AP 111 may communicate with the STA 121 after the association is set up, and the AP 112 may also communicate with the STA 122 after the association is set up.

In some implementations, the communication in the communication system 100 may be the communication between an AP and a non-AP STA, the communication between a non-AP STA and a non-AP STA, or the communication between an STA and a peer STA. Herein, the peer STA may be a device that communicates with the STA in a peer-to-peer manner. For example, the peer STA may be the AP or the non-AP STA.

It is to be understood that FIG. 1 exemplarily illustrates two AP STAs and two non-AP STAs. The communication system 100 may also include a larger number of AP STAs, or the communication system 100 may include other numbers of non-AP STAs, which is not limited in the embodiments of the present disclosure.

In addition, the aforementioned communication system may be applied to a scenario of multi-device cooperation, such as, a scenario of multiple Access Points (multi-AP) cooperation, or a scenario of multi-STA cooperation, etc.

In the embodiments of the present disclosure, the name(s) of the AP and/or the STA are not limited. In some scenarios, the AP may also be referred to as an AP STA, i.e., in a sense, the AP is also an STA. In other scenarios, the STA may also be referred to as a non-AP STA.

In some scenarios, the aforementioned communication device may also be a "multi-link device" (MLD), i.e., a device that may communicate through multiple communication links. Herein, the multiple communication links may include communication links in different frequency bands, for example, the frequency bands may include a millimeter wave frequency band and/or a low frequency band. Typically, if the multi-link device is the AP, the AP may also be referred to as a "multi-link AP"; and if the multi-link device is the STA, the STA may also be referred to as a "multi-link STA".

In the embodiments of the present disclosure, the AP may be a device in a wireless network. The AP may be a communication entity, such as, a communication server, a router, a switch, a network bridge, etc., or the AP may include various forms of macro base stations, micro base stations, relay stations, etc. Of course, the AP may also be a chip, a circuit or a processing system in the various forms of such devices, thereby implementing each of the methods and functions of the embodiments of the present disclosure. The AP may be applied to various scenarios, for example, the AP may be a sensor node (such as a smart water meter, a smart electricity meter, a smart air detection node) in a smart city, a smart device (such as a smart camera, a projector, a display, a television, a stereo, a refrigerator, a washing machine, etc.) in a smart home, a node in the Internet of Things, an entertainment terminal (such as, a wearable device, for example, in Augmented Reality (AR) and Virtual Reality (VR)), a smart device (such as a printer, a projector, etc.) in a smart office, a device in the Internet of Vehicles, and some infrastructure (such as a vending machine, a self-service navigation desk in a supermarket, a self-service checkout device, a self-service ordering machine) in daily life scenarios, etc.

In some implementations, the role of the STA in the communication system is not absolute, and in some scenarios, the STA may act as an AP. For example, in a scenario where a mobile phone is connected to a router, the mobile phone may be the non-AP STA. However, in a case where the mobile phone serves as a hotspot for other mobile phones, the mobile phone acts as the AP.

In the embodiments of the present disclosure, the STA in the embodiments of the present disclosure may be a device having a wireless transceiving function. For example, the STA may support protocols of standard 802.11 family, and may communicate with an AP or another STA. For example, the STA may be any user communication device that allows a user to communicate with the AP and further communicate with the WLAN. For example, the STA may be a User Equipment (UE), a Mobile Station (MS), a Mobile Terminal (MT), an access terminal, a subscriber unit, a subscriber station, a mobile station, a remote station, a remote terminal, a mobile device, a user terminal, a terminal, a wireless communication device, a user agent or a user apparatus, etc.

The STA in the embodiments of the present disclosure may also be a device that provides voice/data connectivity to the user. For example, the STA may be a handheld device having a wireless connection function, an in-vehicle device, etc. For example, the STA may be a mobile phone, a tablet, a laptop, a handheld computer, a Mobile Internet Device (MID), a wearable device, a Virtual Reality (VR) device, an Augmented Reality (AR) device, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, a cellular phone, a cordless phone, a Session Initiation Protocol (SIP) phone, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in a 5G network, or a terminal device in a future evolved Public Land Mobile Network (PLMN), which is not limited in the embodiments of the present disclosure.

By way of example but not limitation, in the embodiments of the present disclosure, the STA may also be a wearable device. The wearable device, also referred to as a wearable intelligent device, is a generic term of wearable devices obtained by performing intelligent design and development on daily wearing products by using the wearable technology, such as glasses, gloves, watches, clothes, and shoes. For example, the wearable intelligent device may be the smart watches or smart glasses; and the wearable intelligent device may focus only on a certain application function, such as various smart bracelets and smart jewelry for monitoring physical signs, which are necessary to be used in conjunction with another device such as a smart phone.

In addition, in the embodiments of the present disclosure, the STA may also be a terminal device in the Internet of Things (IoT) system. The IoT is an important part of the future development of information technology, and the main technical characteristics thereof is to connect articles to the network through communication technology, thereby implementing an intelligent network of human-to-machine interconnection and thing-to-thing interconnection. In the embodiments of the present disclosure, the IoT technology can achieve massive connection, deep coverage, and power saving of terminals through, such as, a Narrow Band (NB) technology.

Furthermore, in the embodiments of the present disclosure, the STA may be a device in the Internet of Vehicles system. The communication manners in the Internet of Vehicles system are collectively referred to as V2X (X represents anything). For example, the V2X communication includes: a vehicle to vehicle (V2V) communication, a vehicle to infrastructure (V2I) communication, a vehicle to pedestrian (V2P) communication, a vehicle to network (V2N) communication, etc.

Moreover, in the embodiments of the present disclosure, the STA may also include: a sensor such as a smart printer, a train detector, and a gas station; and the main functions of the sensor may include: data collection (for some terminal devices), reception of control information and downlink data from the AP, and transmission of electromagnetic waves, and data transmission to the AP.

In addition, the AP in the embodiments of the present disclosure may be a device for communicating with the STA, the AP may be a network device in a wireless local area network, and the AP may be used to communicate with the STA through the wireless local area network.

From the perspective of the communication standard that is supported by the AP, in some implementations, the AP may be a device supporting the standard 802.11be. The AP may be a device that supports various current and future WLAN standards in the standard 802.11 family, which includes 802.11ax, 802.11ac, 802.11n, 802.11g, 802.11b, and 802.11a.

From the perspective of the communication standard that is supported by the STA, in some implementations, the non-AP STA may support the standard 802.11be. The non-AP STA may also support various current and future WLAN standards in the standard 802.11 family, which includes 802.11ax, 802.11ac, 802.11n, 802.11g, 802.11b, and 802.11a.

In the embodiments of the present disclosure, the supportable frequency bands in the WLAN technology are not limited. In some implementations, the supportable frequency bands in the WLAN technology may include, but are not limited to, low frequency bands (e.g., 2.4 GHz, 5 GHz and 6 GHz), and high frequency bands (e.g., 45 GHz and 60 GHz).

It is to be understood that the specific forms of the STA and the AP are not particularly limited in the embodiments of the present disclosure, and are merely for exemplary illustration herein.

### Power Supply Management

Currently, some specifications or protocols (such as IEEE 802.11) define that the non-AP STA may adopt the following two power supply management modes: an active mode and a power save mode.

When the STA is in the active mode (or in an awake state), the STA may receive and transmit frame(s) at any time. In some embodiments, the STA in the active mode may also be understood as that the STA maintains to be in the awake state all the time in the active mode. For example, in the active mode, a non High-Efficiency (HE) STA maintains to be in the awake state. For another example, in the active mode, a HE STA maintains to be in the awake state unless the HE STA is unavailable. It is to be noted that the unavailable STA is unable to receive a Physical Layer (PHY) Protocol Data Unit (PDU) (PPDU). A scenario in which the STA is allowed to be unavailable includes one or more of the following: opportunistic power save, Intra-PPDU power save of a non-AP HE STA, and information frame switching in a target wake time (TWT) of a flexible wake time.

The power save mode includes two power supply states: an awake state and a doze state. When the STA is in the awake state, the STA will be fully powered on and in a fully powered state. When the STA is in the doze state, the STA is unable to transmit or receive non-Wake-Up Radio (WUR) PPDU (non-WUR PPDU), and the power consumption of the STA is very low. In the power save mode, after entering the awake state, the STA may receive or transmit a frame; otherwise, the STA may maintain to be in the doze state.

### Spatial Multiplexing (SM) power save

In the related technologies, the STA consumes the power on all active receive chains, even though the STA does not necessarily need all active receive chains for actual frame switching. For such problem, the SM power save function allows the non-AP STA to use only one active receive chain most of the time.

The STA controls which receive chains are active through a primitive of PHY-RXCONFIG.request. Herein, in the primitive of PHY-RXCONFIG.request, ACTIVE_RXCHAIN_SET of a parameter PHYCONFIG_VECTOR is defined to indicate which receive chain of the STA should be active.

The SM power save mode (or referred to as the SM operating mode) may include a dynamic SM power save mode and a static SM power save mode. Hereinafter, the non-AP STA including a High Throughput (HT) STA is taken as an example.

In the dynamic SM power save mode, the HT STA may enable multiple receive chains when receiving a starting of a frame switching sequence transmitted to the HT STA; and an Enhanced Directional Multi Gigabit (EDMG) STA may enable multiple receive chains only when a received frame indicates that the multiple receive chains are required to be activated for the subsequent transmission. Such frame switching sequence should start from a single spatial stream individual addressing frame. The frame is not a trigger frame, but requires an immediate response and is further addressed to the STA in the dynamic SM power save mode. For the HT STA, a Request to Send (RTS)/Clear to Send (CTS) sequence may be used for such purpose. For the EDMG STA in the dynamic SM power save mode, a grant/grant Ack sequence may be required. The STA should be able to receive, based on a spatial stream capability and an operating mode of the STA, a PPDU transmitted by using multiple spatial streams, after a Short Interframe Space (SIFS) following an ending of a PPDU that is transmitted by the STA as an immediate response. After the ending of the frame switching sequence, the STA may immediately switch back to a single receive chain mode.

In the static SM power save mode, the STA maintains only one active receive chain.

The STA may use a SM power save frame to communicate the SM power save state of the STA. The purpose of the STA communicating the SM power save state may be implemented through the following subfield: an SM power save subfield in an HT capabilities element or an EDMG capabilities element of an association request frame (or a re-association request frame) of the STA, or an SM power save subfield in an HE 6 GHz band capabilities element of the association request frame (or the re-association request frame) of the STA. The SM power save frame may carry an SM power control field. An SM power save enabled subfield included in the SM power control field may indicate whether the STA enables the SM power save function. An SM mode subfield included in the SM power control field may indicate a power save mode of the SM. That is, the SM mode may indicate whether the STA uses the dynamic SM power save mode or the static SM power save mode. The solution of using the association request frame (or the re-association request frame) may allow the STA to immediately use a single receive chain after the association (or the re-association). For example, the SM power save subfield in the HT capabilities element or the HE 6 GHz band capabilities element carried in the association request frame (or the re-association request frame) may indicate that the SM power save mode is operated immediately after the association (or the re-association).

It is to be noted that the number of the active receive chains is changed only when the indication of the SM power save mode has been successfully conveyed (i.e., by acknowledging the following: the frame carrying the HT capabilities element or the EDMG capabilities element, the frame carrying the HE 6 GHz band capabilities element, or the SM power save frame). The indication of the SM power save mode should be transmitted by using an individual addressing frame.

If the HE non-AP STA in the dynamic SM power save mode supports the HE dynamic SM power save, the HE non-AP STA should follow a flow of the dynamic SM power save. Furthermore, the HE non-AP STA should enable the multiple receive chains in response to that the trigger frame for initiating the frame switching sequence satisfies the following conditions. Herein, the conditions may include that: the trigger frame is transmitted in a single spatial stream; the trigger frame is from the associated AP; the trigger frame is a Multi-User Request to Send (MU-RTS) trigger frame, a Buffer Status Report Poll (BSRP) trigger frame, or a Bandwidth Query Report Poll (BQRP) trigger frame, and the trigger frame includes a user Info field, where an Association Identifier (AID)12 subfield of the user Info field is equal to the 12 least significant bits of the starting AID of the HE non-AP STA.

The HE non-AP STA should be able to receive, based on a spatial stream capability and an operating mode of the HE non-AP STA, a PPDU transmitted by using multiple spatial streams, after an SIFS following an ending of a PPDU that is transmitted by the HE non-AP STA as a response. After the ending of the frame switching sequence, the HE non-AP STA may immediately switch back to a single receive chain mode

### Enhanced Multi-Link Single Radio (EMLSR) operation

The EMLSR operation may allow a non-AP MLD having multiple receive links to monitor on one or more EMLSR links. Herein, the corresponding non-AP STA affiliated with the non-AP MLD may be in the awake state, to receive an initial control frame from the AP affiliated with the AP MLD by using the non-HT (duplicate) PPDU, and further participate in the frame switching on the link in which the initial control frame is received.

The non-AP MLD may specify that the EMLSR mode is operated on a set of enabled links between the non-AP MLD and the AP MLD associated with the non-AP MLD. Herein, the specified set of enabled links on which the EMLSR mode is applied may be referred to as EMLSR links. If a non-AP STA, affiliated with a non-AP MLD, that is operational on one of the EMLSR links is in the awake state, a station, affiliated with the non-AP MLD, that is not operational on an enabled link on which the EMLSR mode is applied should be in the doze state.

When the non-AP MLD operates on the EMLSR link in the EMLSR mode, the non-AP STA that operates on the EMLSR link and is affiliated with the non-AP MLD may be unable to operate on the EMLSR link in the dynamic SM power save mode.

The non-AP MLD and the AP MLD that supports the EMLSR mode may perform operations by adopting the following rules 1 to 4 in the EMLSR mode.

In the rule 1, the non-AP MLD should be able to monitor on the EMLSR link by enabling the non-AP STA that is affiliated with the non-AP MLD and corresponds to the EMLSR link to be in the awake state. The monitoring operation may include a Clear Channel Assessment (CCA) and a reception of the initial control frame for the frame switching that is initiated by the AP MLD. The non-AP STA that operates on the EMLSR link may change the power supply management mode of the non-AP STA. The non-AP STA may monitor on the EMLSR link in the active mode, or monitor on the EMLSR link in the awake state in the Power Save (PS) mode.

In the rule 2, when, on an EMLSR link, the AP affiliated with the AP MLD initiates the frame switching (that is neither of a group-addressed data frame nor a group-addressed management frame) with the non-AP MLD, the AP should initiate the frame switching by transmitting the initial control frame to the non-AP MLD. There are the following specified limitations. The initial control frame for the frame switching should be transmitted in a non-HT PPDU format or a non-HT duplicate PPDU format, and at a rate of 6 Mb/s, 12 Mb/s or 24 Mb/s. The AP affiliated with the AP MLD may set a length of a padding field of the initial control frame based on the rule defined in the trigger frame padding, to ensure that a Media Access Control (MAC) padding duration of the initial control frame is greater than or equal to the EMLSR padding latency time. Additionally, the initial control frame should be the MU-RTS trigger frame or the BSRP trigger frame, and the number of spatial streams responding to the BSRP trigger frame should be limited to be one and further indicated in the BSRP trigger frame.

In the rule 3, when receiving the initial control frame for the frame switching and transmitting an immediate response frame as a response to the initial control frame, the non-AP STA that is affiliated with the non-AP MLD and monitors on the corresponding link may be able to transmit or receive the frame on a link on which the initial control frame is received, rather than to transmit or receive the frame on another EMLSR link. Furthermore, limited by the spatial stream capability of the non-AP STA, the operating mode of the non-AP STA, and the minimum MAC frame padding duration of the padding field of the initial control frame of the non-AP STA, after the SIFS following an ending of the transmission of the response frame requested by the initial control frame, the non-AP STA that is affiliated with the non-AP MLD and corresponds to the link on which the initial control frame is received should be able to receive the PPDU transmitted by using multiple spatial streams. During the process of the frame switching, other APs affiliated with the AP MLD may be unable to transmit the frame to other non-AP STAs affiliated with the non-AP MLD on the other EMLSR links.

In the rule 4, after an EMLSR transition delay time following the ending of the frame switching, the non-AP MLD should switch back to the monitoring operation on the EMLSR link.

In order to reduce the power consumption of the communication device (such as the access point, the station), the power save mode is introduced in the related technologies. For example, the power save mode (including the awake state and the doze state) of the station is defined in the specification IEEE 802.11. However, the current power save mode is inflexible in operation, the degree of power save controllability is not precise enough, and the better power save effect cannot be achieved while adapting the communication capabilities (e.g., the frame switching capability).

As an example, in the power supply management mode defined in the current specification, when the STA is in the active mode or in the awake state of the power save mode, the STA needs to be fully powered on or in the fully powered state, and the power save effect is poor. In order to improve the power save effect of the STA, the related technologies propose the EMLSR mode. However, the operation of the EMLSR mode is mainly for the multi-link device. Although the device in the EMLSR mode performs the monitoring with a low-power-consumption monitoring capability, when entering the frame switching, the STA still needs to switch to the fully powered (or high-power-consumption) state (even if the fully-powered switching capability is not required for the current frame switching).

For the above problems, the embodiments of the present disclosure introduce a new operating mode (i.e., the first operating mode hereinafter). The operating mode allows the communication device to perform, in the awake state, communication in different capability modes, thereby facilitating the achievement of a better power save effect while adapting the communication capabilities. Hereinafter, the embodiments of the method of the present disclosure are described.

FIG. 2 is a flowchart of a method for wireless communication according to an embodiment of the present disclosure. The method illustrated in FIG. 2 is introduced from the perspective of interaction between a first device and a second device. The first device and the second device are firstly introduced below.

In an embodiment of the present disclosure, the first device may be a device that transmits a first frame (or first information). That is, the first device may be the device for indicating the information related to the first operating mode. In some embodiments, the first device may be an initiator of the first frame (or the first information).

In some embodiments, the first device may be a station device, such as the STA 121 or the STA 122 illustrated in FIG. 1. For example, the first device may be a non-AP STA. For another example, the first device may be a station device that is a multi-link device. For yet another example, the first device may be a station device that is a non-multi-link device.

In some embodiments, the first device may be an access point device, such as the AP 111 or the AP 112 illustrated in FIG. 1. For example, the first device may be the AP. For another example, the first device may be an access point device that is a multi-link device. For yet another example, the first device may be an access point device that is a non-multi-link device.

In an embodiment of the present disclosure, the second device may be a device that receives the first frame (or the first information). That is, the second device may be the device for receiving the information related to the first operating mode. In some embodiments, the second device may be a responder of the first frame (or first information).

In some embodiments, the second device may be a station device, such as the STA 121 or the STA 122 illustrated in FIG. 1. For example, the second device may be a non-AP STA. For another example, the second device may be a station device that is a multi-link device. For yet another example, the second device may be a station device that is a non-multi-link device.

In some embodiments, the second device may be an access point device, such as the AP 111 or the AP 112 illustrated in FIG. 1. For example, the second device may be the AP. For another example, the second device may be an access point device that is a multi-link device. For yet another example, the second device may be an access point device that is a non-multi-link device.

In some embodiments, when the first device is the station device, the second device may be the access point device.

In some embodiments, when the first device is the station device, the second device may be the station device.

In some embodiments, when the first device is the access point device, the second device may be the station device.

In some embodiments, when the first device is the access point device, the second device may be the access point device.

In some embodiments, the first device may have one or more receive chains. For example, the first device may be a station device having a single receive chain or multiple receive chains. Alternatively, the first device may be an access point device having a single receive chain or multiple receive chains.

In some embodiments, the second device may have one or more receive chains. For example, the second device may be a station device having a single receive chain or multiple receive chains. Alternatively, the second device may be an access point device having a single receive chain or multiple receive chains.

The method illustrated in FIG. 2 includes an operation S210 that is described below.

At block S210, the first device transmits the first frame to the second device. In the embodiments of the present disclosure, the first frame includes the first information.

In some embodiments, the first information is associated with the first operating mode (or a first power save mode, a capability adaptation power save operating mode, etc.) of the first device. Alternatively, the first information may be related to the first operating mode of the first device, that is, the first information may include the information related to the first operating mode of the first device.

The first operating mode is introduced into the embodiments of the present disclosure, and the first operating mode allows the first device to perform, in the awake state, communication in different capability modes. In such way, the first device in the awake state may select different capability modes according to different situations, to perform the communication, which is beneficial to achieving the better power save effect while ensuring the communication capabilities.

In order to facilitate understanding, the first operating mode is firstly described below.

In the embodiments of the present disclosure, the first operating mode allows the first device to perform, in the awake state, communication in different capability modes. That is, when the first device is in the first operating mode, the first device is able to perform, in the awake state, communication in different capability modes. In other words, the first operating mode may include multiple capability modes (or include different capability modes), and the first device may select one of the multiple capability modes to perform the communication.

In some embodiments, the first operating mode may include the awake state and another state (e.g., the doze state) rather than the awake state. Furthermore, the first device is able to perform, in the awake state of the first operating mode, the communication (or operation) in different capability modes.

The communication procedure may not be limited in the embodiments of the present disclosure. Exemplarily, the "communication" mentioned in the embodiments of the present disclosure may include one or more of the following communication procedures: monitoring of an operating channel, reception of information or data, transmission of information or data, frame switching, etc.

The multiple capability modes included in the first operating mode may not be limited in the embodiments of the present disclosure. Exemplarily, the first operating mode may include one or more of the following capability modes: a low capability mode, a high capability mode, and a full capability mode. In some embodiments, the full capability mode may be understood to belong to one of the high capability modes, i.e., the high capability mode may include the full capability mode.

In some embodiments, the different capability modes included in the first operating mode may be pre-negotiated or determined by default. For example, the low capability mode and/or high capability mode included in the first operating mode may be pre-negotiated or determined by default.

In some embodiments, the first operating mode may be associated with one or more operating parameters. Exemplarily, the operating parameter associated with the first operating mode may include one or more of the following: an operating parameter associated with the low capability mode, an operating parameter associated with the high capability mode, a latency parameter for the switching between different capability modes, a mode index corresponding to the low capability mode, and a mode index corresponding to the high capability mode.

In some embodiments, the first operating mode may be associated with one or more operating parameters, to indicate different capability modes through the one or more operating parameters. Exemplarily, the first operating mode may be associated with one or more of the following operating parameters, or the first operating mode may be indicated through one or more of the following operating parameters: an operating bandwidth, the number of receive chains, a modulation parameter of a Modulation and Coding Scheme (MCS), the number of receivable space-time/spatial streams, the number of transmissible space-time/spatial streams, a data rate, a PPDU format that is supported to be received.

Taking the first operating mode to include the low capability mode as an example, the low capability mode may be associated with one or more of the following operating parameters: an operating bandwidth in the low capability mode, the number of receive chains in the low capability mode, a modulation parameter of an MCS in the low capability mode, the number of receivable space-time/spatial streams in the low capability mode, the number of transmissible space-time/spatial streams in the low capability mode, a data rate in the low capability mode, and a PPDU format that is supported to be received in the low capability mode.

Taking the first operating mode to include the high capability mode as an example, the high capability mode may be associated with one or more of the following operating parameters: an operating bandwidth in the high capability mode, the number of receive chains in the high capability mode, a modulation parameter of an MCS in the high capability mode, the number of receivable space-time/spatial streams in the high capability mode, the number of transmissible space-time/spatial streams in the high capability mode, a data rate in the high capability mode, and a PPDU format that is supported to be received in the high capability mode.

In some embodiments, the number of receivable space-time/spatial streams associated with the first operating mode may be the maximum number of receivable space-time/spatial streams, but which is not limited in the embodiments of the present disclosure. For example, the number of receivable space-time/spatial streams associated with the first operating mode may be the minimum number of receivable space-time/spatial streams, etc.

In some embodiments, the number of transmissible space-time/spatial streams associated with the first operating mode may be the maximum number of transmissible space-time/spatial streams, but which is not limited in the embodiments of the present disclosure. For example, the number of transmissible space-time/spatial streams associated with the first operating mode may be the minimum number of transmissible space-time/spatial streams, etc.

In some embodiments, the multiple capability modes included in the first operating mode may be associated with different operating parameters. For example, the operating parameter associated with the low capability mode may be different from the operating parameter associated with the high capability mode. Alternatively, the operating parameter associated with the low capability mode may be different from the operating parameter associated with the full capability mode.

In some embodiments, the operating parameters associated with the multiple capability modes being different may mean that the values of the operating parameters associated with the multiple capability modes are different.

Taking the operating parameter associated with the first operating mode to include the operating bandwidth, the number of receive chains, the modulation parameter of the MCS, the number of the receivable space-time/spatial streams, the number of the transmissible space-time/spatial streams, and the data rate and the PPDU format that is supported to be received as an example, the different capability modes may mean that the operating bandwidth, the number of receive chains, the modulation parameter of the MCS, the number of the receivable space-time/spatial streams, the number of the transmissible space-time/spatial streams, the data rate, and the PPDU format that is supported to be received included in one of such capability modes are different from those included another one of the capability modes. Taking the first operating mode to include the low capability operating mode and the high capability operating mode as an example, the low capability mode may mean that the first device may perform the communication by using a lower bandwidth, fewer receive chains, a low-order modulation parameter of the MCS, fewer space-time/spatial streams, a lower data rate and a PPDU format with a low processing overhead. Additionally, the high capability mode may mean that the first device may perform the communication by using a higher bandwidth, more receive chains, a high-order modulation parameter of the MCS, more space-time/spatial streams, a higher data rate and a PPDU format with a high processing overhead.

Taking the operating parameter associated with the first operating mode to include the operating bandwidth, the number of receive chains and the PPDU format that is supported to be received as an example, the different capability modes may mean that the operating bandwidth, the number of receive chains, and the PPDU format that is supported to be received included in one of such capability modes are different from those included another one of the capability modes. Taking the first operating mode to include the low capability operating mode and the high capability operating mode as an example, the low capability mode may mean that the first device may perform the communication by using the lower bandwidth, fewer receive chains and the PPDU format with the low processing overhead; and the high capability mode may mean that the first device may perform the communication by using the higher bandwidth, more receive chains and high processing overhead.

In some embodiments, the first operating mode may include different capability modes, and each of which may in turn be associated with different operating parameters (e.g., the values of different operating parameters). Taking the first operating mode to include the low capability operating mode and the high capability operating mode as an example, the low capability mode may be associated with values of multiple different operating parameters, and the high capability mode may also be associated with values of multiple different operating parameters. As an example, the operating parameter associated with the first operating mode may include the operating bandwidth and the number of the receive chains. In such case, the operating parameter including an operating bandwidth of 20 MHz and one receive chain may be understood as the low capability mode, and the operating parameter including an operating bandwidth of 40 MHz and two receive chains may also be understood as the low capability mode. Moreover, the operating parameter including an operating bandwidth of 80 MHz and four receive chains may be understood as the high capability mode, and the operating parameter including an operating bandwidth of 160 MHz and six receive chains may also be understood as the high capability mode, and the like. As another example, the operating parameter associated with the first operating mode may include the operating bandwidth, the number of the receive chains and the modulation parameter of the MCS. In such case, the operating parameter including an operating bandwidth of 20 MHz, 1 receive chain and a low-order modulation parameter of the MCS may be understood as the low capability mode; and the operating parameter including an operating bandwidth of 40 MHz, 2 receive chains and a low-order modulation parameter of the MCS may also be understood as the low capability mode. Moreover, the operating parameter including an operating bandwidth of 80 MHz, 4 receive chains and a high-order modulation parameter of the MCS may be understood as the high capability mode; and the operating parameter including an operating bandwidth of 160 MHz, 6 receive chains and the high-order modulation parameter of the MCS may also be understood as the high capability mode.

In other words, in some embodiments, the first operating mode may be associated with the operating parameter with different gears, and one or more gears of the different gears of the operating parameter may correspond to one capability mode. For example, the first operating mode may be associated with the operating parameter with 5 gears, one or more gears of the 5 gears may correspond to the low capability mode, and the remaining gears of the 5 gears may correspond to the high capability mode. As an example, the operating parameter associated with the first operating mode may include the operating bandwidth and the number of the receive chains, the first operating mode may be associated with the operating parameters with 5 gears, which include: a gear 1 (the operating bandwidth of 20 MHz, one receive chain), a gear 2 (the operating bandwidth of 40 MHz, 2 receive chains), a gear 3 (the operating bandwidth of 60 MHz, 3 receive chains), a gear 4 (the operating bandwidth of 80 MHz, 4 receive chains), and a gear 5 (the operating bandwidth of 160 MHz, 6 receive chains). The gear 1 and gear 2 may correspond to the low capability mode, and the gear 3, gear 4, and gear 5 may correspond to the high capability mode.

In some embodiments, in addition to the aforementioned operating parameter(s) for indicating different capability modes, the operating parameter(s) associated with the first operating mode may include other operating parameters. For example, the operating parameter(s) associated with the first operating mode may further include a latency parameter for switching between different capability modes.

In some embodiments, the latency parameter for the switching between different capability modes may include one or more of the following: the minimum latency required for the switching from the low capability mode to the high capability mode (or the full capability mode), and the minimum latency required for the switching from the high capability mode (or the full capability mode) to the low capability mode.

In some embodiments, the minimum latency required for the switching from the low capability mode to the high capability mode (or the full capability mode) may include the minimum MAC padding duration of a frame that is required for the switching from the low capability mode to the high capability mode (or the full capability mode), such as, the minimum MAC padding duration of an initial frame required for the switching from the low capability mode to the high capability mode (or the full capability mode).

In some embodiments, the minimum latency required for switching from the high capability mode (or the full capability mode) to the low capability mode may also be referred to as a transition latency of the first operating mode.

In some embodiments, the latency parameter for the switching between different capability modes may be pre-negotiated or determined by default. For example, the latency for the switching from the low capability mode to the high capability mode may be pre-negotiated or determined by default. Alternatively, the latency for the switching from the high capability mode to the low capability mode may be pre-negotiated or determined by default.

In some embodiments, the parameter(s) associated with the first operating mode may further include a mode index corresponding to the low capability mode and/or a mode index corresponding to the high capability mode. The mode index may be used to indicate different capability modes or different capability gears. For example, the mode index of 0 may indicate the low capability mode, and the mode index of 1 may indicate the high capability mode. For another example, the mode index of each of 0, 1 and 2 may indicate the low capability mode, where the low capability modes corresponding to different mode indexes may be associated with different operating parameters (e.g., the mode index of 0 may indicate the operating bandwidth of 20 MHz, the mode index of 1 may indicate the operating bandwidth of 40 MHz, and the mode index of 2 may indicate the operating bandwidth of 80 MHz). Additionally, the mode index of each of 3 or 4 may indicate the high capability mode, where the high capability modes corresponding to different mode indexes may be associated with different operating parameters (e.g., the mode index of 3 may indicate the operating bandwidth of 160 MHz, and the mode index of 4 may indicate the operating bandwidth of 320 MHz).

In the embodiments of the present disclosure, there are multiple types of the first operating mode. For example, the type of the first operating mode may include a static first operating mode and a dynamic first operating mode. In some embodiments, the static first operating mode may mean that the first device, in the operating mode, maintains the low capability mode for operation. In some embodiments, the dynamic first operating mode may mean that the first device, in the operating mode, switches from the low capability mode to the high capability mode for operation.

In some embodiments, the dynamic first operating mode may also be referred to as a dynamic power save mode, a dynamics power save mode, etc.

In some embodiments, there may be multiple dynamic first operating modes. For example, the dynamic first operating mode may include one or more of the following: a default operation-based first operating mode, a forced control-based first operating mode, and a negotiated control-based first operating mode.

That is, in the embodiments of the present disclosure, the type(s) of the first operating mode may include one or more of the following: the static first operating mode, the default operation-based first operating mode, the forced control-based first operating mode, and the negotiated control-based first operating mode.

In some embodiments, the type(s) of the first operating mode may be pre-negotiated, or determined by default.

The type(s) of the first operating mode are described in detail below.

### Static first operating mode

When the type of the first operating mode is the static first operating mode, the first device may maintain the low capability mode for communication (e.g., maintaining the low capability mode for the frame switching). For example, when the type of the first operating mode is the static first operating mode, the first device may only maintain the low capability mode for the communication. In some embodiments, the first device maintaining the low capability mode for the communication may also be understood as that the first device does not perform the switching from the low capability mode to the high capability mode when performing the frame switching; or, the first device does not switch from the low capability mode to the high capability mode when performing the frame switching. In other words, when the type of the first operating mode is the static first operating mode, the first device may monitor the operating channel and perform the transceiving operation in the low capability mode.

Taking the first device to be the station device as an example, when the first device is in the static first operating mode, during the process of the frame switching with the first device initiated by an access point device (or a peer station device) that is associated with the first device, the first device may maintain to be in the low capability mode for the communication (i.e., the first device may monitor the operating channel and perform the transceiving operation in the low capability mode).

### Default operation-based first operating mode

In a case where the first device is in the default operation-based first operating mode, during the process of the frame switching with the first device initiated by the second device, when the first device receives a second frame (i.e., the frame used to instruct the first device to perform the frame switching) from the second device, the second frame may be received based on one or more of the following: an operating parameter associated with the low capability mode, and an operating parameter associated with the low capability mode indicated by the first frame. After receiving the second frame, the first device may be able to switch to the high capability mode for the frame switching in the current frame switching sequence (i.e., the frame switching sequence at which the second frame is located).

Taking the first device to be the station device as an example, when the first device operates in the default operation-based first operating mode, and an access point device (or a peer station device) associated with the first device transmits the second frame to the first device, the operating parameter(s) (such as, the operating bandwidth, and the number of receive chains) used by the first device during the reception of the second frame may be constrained by the operating parameter(s) associated with the low capability mode and/or the operating parameter(s) indicated by the first frame (which may also be understood as the operating parameter(s) notified in the first operating mode). After the switching of the second frame, the first device may be able to perform the frame switching by using the operating parameter(s) associated with the high capability mode, until the ending of the frame switching sequence at which the switching of the second frame occurs.

In some embodiments, after the ending of the current frame switching sequence (i.e., the frame switching sequence at which the switching of the second frame occurs), the first device may switch back to the low capability mode.

In some embodiments, the second frame may be transmitted by using a PPDU that satisfies the low capability mode of the first device, to ensure that the first device can be able to receive the second frame in the low capability mode.

In some embodiments, the second frame may be transmitted by using a rate requirement that satisfies the low capability mode of the first device, to ensure that the first device can be able to receive the second frame in the low capability mode.

In some embodiments, the second frame may include an initial frame and/or a trigger frame. The initial frame may be, for example, an initial control frame or a Quality of Service (QoS) null frame. The trigger frame may be, for example, a MU-RTS trigger frame or a basic trigger frame. The initial frame or the trigger frame may be used to instruct the first device to perform the frame switching. The format of the second frame may be referred to the description later, which is not described in detail herein.

In some embodiments, the first device receiving the second frame may also be understood as that the first device receives the PPDU that carries the second frame. The second device transmitting the second frame may also be understood as that the second device transmits the PPDU that carries the second frame.

In some embodiments, when the first device is in the default operation-based first operating mode, and the second device transmits the second frame to the first device, the padding latency of the PPDU that carries the second frame may need to be greater than or equal to the minimum latency (or called as the minimum padding latency, the minimum MAC padding latency, etc.) required for the switching from the low capability mode to the high capability mode indicated by the first device in the first frame. Thus, the first device in the default operation-based first operating mode can be ensured to be able to switch from the low capability mode to the high capability mode before a time moment of the ending of the transmission of the PPDU.

### Forced control-based first operating mode

When the first device is in the forced control-based first operating mode, the first device may perform, based on an indication from the second device, the switching between different capability modes.

When the first device is in the forced control-based first operating mode, the first device, in the awake state, may be able to monitor the operating channel or perform the transceiving operation in the low capability mode. Furthermore, when receiving the second frame (i.e., the frame used to indicate whether the first device switches to the high capability mode) that is transmitted to the first device, the first device may perform a corresponding operation based on the indication of the second frame.

As an implementation, the second frame may include fourth information, and the fourth information may be used to indicate whether the first device switches to the high capability mode. In some embodiments, the fourth information may be understood as imperative indication information. That is, if the fourth information indicates that the first device switches to the high capability mode, the first device may switch to the high capability mode for the frame switching in the current frame switching sequence (i.e., the frame switching sequence at which the second frame is located). Additionally, if the fourth information indicates that the first device does not switch to the high capability mode, the first device may maintain the low capability mode for the frame switching in the current frame switching sequence (i.e., the frame switching sequence at which the second frame is located).

Taking the first device to be the station device as an example, when the first device operates in the forced control-based first operating mode, the first device, in the awake state, may monitor the operating channel or perform the transceiving operation in the low capability mode. When receiving the second frame, the first device may determine, based on the indication of the second frame, whether to switch to the high capability mode. For example, if the second frame indicates switching to the high capability mode, the first device may switch to the high capability mode for the frame switching in the current frame switching sequence. Alternatively, if the second frame indicates not switching to the high capability mode, the first device may maintain the low capability mode for the frame switching in the current frame switching sequence.

In some embodiments, after the ending of the current frame switching sequence (i.e., the frame switching sequence at which the switching of the second frame occurs), the first device may switch back to the low capability mode.

In some embodiments, the second frame may be transmitted by using the PPDU that satisfies the low capability mode of the first device, to ensure that the first device can be able to receive the second frame in the low capability mode.

In some embodiments, the second frame may be transmitted by using the rate requirement that satisfies the low capability mode of the first device, to ensure that the first device can be able to receive the second frame in the low capability mode.

In some embodiments, the second frame may include the initial frame and/or the trigger frame. The initial frame may be, for example, an initial control frame or a QoS null frame. The trigger frame may be, for example, a MU-RTS trigger frame or a basic trigger frame. The initial frame or the trigger frame may be used to indicate whether the first device switches to the high capability mode. The format of the second frame may be referred to the description later, which is not described in detail herein.

In some embodiments, the first device receiving the second frame may also be understood as that the first device receives the PPDU that carries the second frame. The second device transmitting the second frame may also be understood as that the second device transmits the PPDU that carries the second frame.

In some embodiments, when the first device is in the forced control-based first operating mode, and the second device transmits the second frame to the first device, the padding latency of the PPDU that carries the second frame may need to be greater than or equal to the minimum latency (or called as the minimum padding latency, the minimum MAC padding latency, etc.) required for the switching from the low capability mode to the high capability mode indicated by the first device in the first frame. Thus, the first device in the forced control-based first operating mode can be ensured to be able to switch from the low capability mode to the high capability mode before a time moment of the ending of the transmission of the PPDU.

### Negotiated control-based first operating mode

When the first device is in the negotiated control-based first operating mode, the first device may negotiate with the second device to determine the switching between different capability modes, which is beneficial to reducing the frequency of the switching performed by the first device.

When the first device is in the negotiated control-based first operating mode, the first device, in the awake state, may be able to monitor the operating channel or perform the transceiving operation in the low capability mode. Furthermore, when receiving the second frame (i.e., the frame used to request (or instruct) the first device to switch to the high capability mode) that is transmitted to the first device, the first device may determine and response whether to switch based the indication of the second frame.

In some embodiments, the second frame may include one or more of the following information: second information, and third information. The second information may be used to request the first device to switch to the high capability mode. The third information may be used to indicate the requested operating parameter(s) (e.g., the requested operating bandwidth, the number of requested receive chains, etc.). That is, the third information may be used to indicate the operating parameter(s) associated with the first operating mode (e.g., the high capability mode) to which the first device is requested to switch.

As an implementation, the second frame may include the second information. After receiving the second frame, the first device may determine, based on the second information, whether to switch to the high capability mode.

As another implementation, the second frame may include the third information. After receiving the second frame, the first device may determine, based on the third information, whether to switch to the high capability mode as well as the operating parameter(s) associated with the switched high capability mode.

As yet another implementation, the second frame may include the second information and the third information. After receiving the second frame, the first device may determine, based on the second information and the third information, whether to switch to the high capability mode as well as the operating parameter(s) associated with the switched high capability mode.

In some embodiments, after receiving the second frame, the first device may transmit a response frame of the second frame to the second device.

In some embodiments, the response frame of the second frame transmitted from the first device to the second device may indicate one or more of the following: whether the first device performs the switching based on the second information, and operating parameter(s) associated with a target capability mode to which the first device switches.

In some embodiments, the target capability mode to which the first device switches may be the high capability mode. In such case, the operating parameter(s) associated with the target capability mode to which the first device switches may be the operating parameter(s) associated with the high capability mode.

In some embodiments, if the response frame of the second frame indicates that the first device performs the switching based on the second information, the first device may switch to the high capability mode for the frame switching in the current frame switching sequence (i.e., the frame switching sequence at which the second frame is located).

In some embodiments, if the response frame of the second frame indicates that the first device does not perform the switching based on the second information, the first device may maintain the low capability mode for the frame switching in the current frame switching sequence (i.e., the frame switching sequence at which the second frame is located).

In some embodiments, the operating parameter(s) (i.e., the operating parameter(s) carried in the response frame of the second frame) associated with the target capability mode to which the first device switches may be the same as the operating parameter(s) (i.e., the operating parameter(s) carried in the second frame) associated with the high capability mode to which the second device requests the first device to switch. Taking the operating parameter(s) associated with the first operating mode to include the operating bandwidth and the number of receive chains as an example, both of the operating parameter(s) carried in the second frame and the operating parameter(s) carried in the response frame of the second frame may be: an operating bandwidth of 80 MHz and four receive chains.

In some embodiments, the operating parameter(s) (i.e., the operating parameter(s) carried in the response frame of the second frame) associated with the target capability mode to which the first device switches may be different from the operating parameter(s) (i.e., the operating parameter(s) carried in the second frame) associated with the high capability mode to which the second device requests the first device to switch. Taking the operating parameter(s) associated with the first operating mode to include the operating bandwidth and the number of receive chains as an example, the operating parameter(s) carried in the second frame may be: an operating bandwidth of 160 MHz and 4 receive chains; and the operating parameter(s) carried in the response frame of the second frame may be: an operating bandwidth of 80 MHz and 4 receive chains.

In some embodiments, in a case where the second device requests, in the second frame, the first device to switch to the high capability mode, the first device may agree to the request from the second device. That is, the first device may indicate switching to the high capability mode in the response frame of the second frame.

In some embodiments, in the case where the second device requests, in the second frame, the first device to switch to the high capability mode, the first device may agree to the request from the second device and also agree to perform the frame switching by using the operating parameter(s) requested by the second device.

In some embodiments, in the case where the second device requests, in the second frame, the first device to switch to the high capability mode, the first device may agree to the request from the second device, but reject to perform the frame switching by using the operating parameter(s) requested by the second device. In such case, the first device may indicate a new operating parameter (i.e., an operating parameter associated with the target capability mode) in the response frame of the second frame.

In some embodiments, in the case where the second device requests, in the second frame, the first device to switch to the high capability mode, the first device may reject the request from the second device.

Taking the first device to be the station device as an example, when the first device operates in the negotiated control-based first operating mode, the first device, in the awake state, may monitor the operating channel or perform the transceiving operation in the low capability mode. When receiving the second frame, the first device may determine and response, based on the indication of the second frame, whether to switch to the high capability mode. For example, when the first device is requested to switch to the high capability mode in the second frame, if the first device accepts to switch to the high capability mode, the first device may switch to the high capability mode for the frame switching in the current frame switching sequence; and if the first device rejects to switch to the high capability mode, the first device may maintain the low capability mode for the frame switching in the current frame switching sequence. In some embodiments, the first device may accept to switch to the high capability mode but does not accept to perform the frame switching by using the operating parameter(s) requested by the second device. In such case, the first device may indicate a new operating parameter (i.e., the operating parameter associated with the target capability mode) to the second device for the frame switching based on the new operating parameter.

In some embodiments, after the ending of the current frame switching sequence (i.e., the frame switching sequence at which the switching of the second frame occurs), the first device may switch back to the low capability mode.

In some embodiments, the second frame may be transmitted by using the PPDU that satisfies the low capability mode of the first device, to ensure that the first device can be able to receive the second frame in the low capability mode.

In some embodiments, the second frame may be transmitted by using the rate requirement that satisfies the low capability mode of the first device, to ensure that the first device can be able to receive the second frame in the low capability mode.

In some embodiments, the second frame may be received by the first device before entering the frame switching. In some embodiments, the second frame may be received by the first device when entering the frame switching or during the frame switching.

In some embodiments, the second frame may include an initial frame and/or a trigger frame. The initial frame may be, for example, an initial control frame or a QoS null frame. The trigger frame may be, for example, a MU-RTS trigger frame or a basic trigger frame. The initial frame or the trigger frame may be used to request the first device to switch to the high capability mode and/or used to indicate the requested operating parameter(s). The format of the second frame may be referred to the description later, which is not described in detail herein.

In some embodiments, the response frame of the second frame may include one or more of the following: a block acknowledgement frame, and a response frame of the trigger frame. The format of the response frame of the second frame may be referred to the description later, which is not described in detail herein.

In some embodiments, the first device receiving the second frame may also be understood as that the first device receives the PPDU that carries the second frame. The second device transmitting the second frame may also be understood as that the second device transmits the PPDU that carries the second frame.

In some embodiments, when the first device is in the negotiated control-based first operating mode, and the second device transmits the second frame to the first device, a padding latency of the PPDU that carries the second frame may need to be greater than or equal to the minimum latency (or called as the minimum padding latency, the minimum MAC padding latency, etc.) required for the switching from the low capability mode to the high capability mode indicated by the first device in the first frame. Thus, the first device in the negotiated control-based first operating mode can be ensured to be able to switch from the low capability mode to the high capability mode before a time moment of the ending of the transmission of the PPDU.

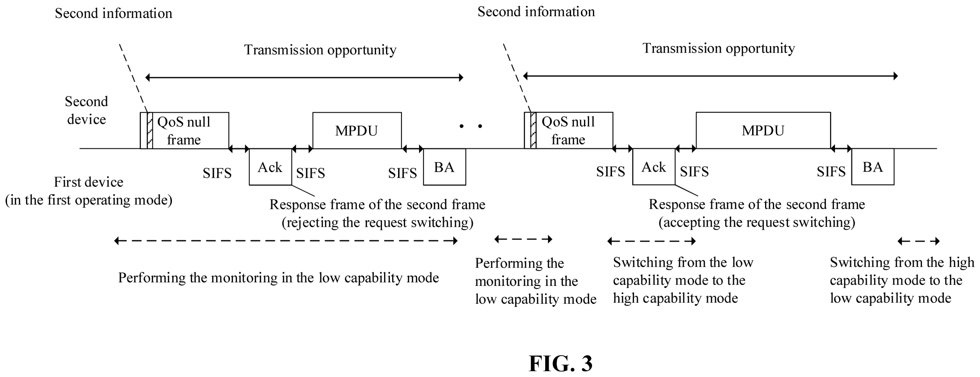

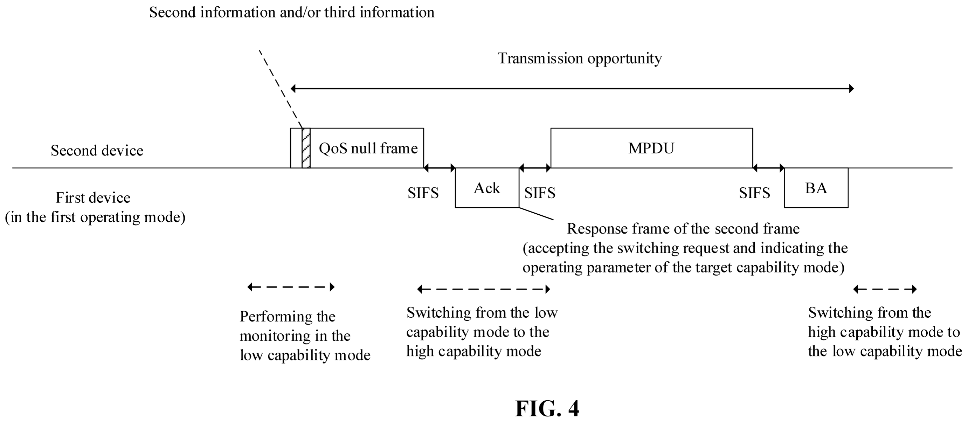

Two examples of the negotiated control-based first operating mode are given below in conjunction with FIGS. 3 and 4.

As illustrated in FIG. 3, when the first device is in the negotiated control-based first operating mode, the first device may perform the monitoring operation in the low capability mode. When the second device acquires a transmission opportunity to transmit the second frame (e.g., the QoS null frame) to the first device, and the second frame carries the second information to request the first device to switch to the high capability mode, the first device may maintain the current low capability mode if the switching request is rejected. When the second device acquires another transmission opportunity to transmit the second frame (e.g., the QoS null frame) to the first device, and the second frame carries the second information to request the first device to switch to the high capability mode, the first device may switch to the high capability mode for the frame switching in the current frame switching sequence if the switching request is accepted, and the first device may return back to the low capability mode after the ending of the frame switching.

As illustrated in FIG. 4, when the first device is in the negotiated control-based first operating mode, the first device may perform the monitoring operation in the low capability mode. When the second device acquires a transmission opportunity to transmit the second frame (e.g., the QoS null frame) to the first device, and the second frame carries the second information and the third information, the first device may transmit a response frame (e.g., an ACK frame) of the second frame to the second device to carry switching response information. For example, if the first device accepts the switching request, the response frame of the second frame may include indication information for accepting the switching and/or the operating parameter(s) associated with the switched target capability mode. Meanwhile, the first device may switch, in the current frame switching sequence, to the high capability mode corresponding to the operating parameter(s) indicated by the response frame of the second frame for the frame switching, and may return back to the low capability mode after the ending of the frame switching.

On the basis of the aforementioned description of the first operating mode, the first frame and the first information are described below.

In some embodiments, the first frame may be used to indicate (or notify) the information related to the first operating mode of the first device. For example, the first frame may indicate the information related to the first operating mode of the first device through the first information. In the embodiments of the present disclosure, the first frame may be used to indicate (or notify) the information related to the first operating mode, which is beneficial to ensuring that another device (e.g., the second device) can communicate with the first device based on the first operating mode of the first device (for example, based on the operating parameter(s) associated with the first operating mode of the first device). Therefore, the power consumption of the device can be saved while the normal communication can be ensured.

In some embodiments, the first frame may include a control field. For example, the first frame may include an A-Control field.

In some embodiments, the first information may be carried in the control field of the first frame. For example, the first information may be carried in the A-Control field of the first frame.

In some embodiments, the first frame may be a management frame, e.g., a class 3 management frame.

In some embodiments, the first frame may be a data frame, e.g., a QoS data frame.

In some embodiments, the first frame may be an existing frame. For example, the first frame may be an existing frame that includes the control field (such as the A-Control field). As an example, the first frame may include one or more of the following: the QoS data frame, the QoS null frame, and the class 3 management frame. When the first operating mode (or the first information) is indicted in the existing frame that includes the control field, the transmission speed can be fast and the signaling overhead can be low.

In some embodiments, when the first frame is the QoS data frame, the first frame may be an individual addressing QoS data frame.

However, the first frame is not limited in the embodiments of the present disclosure, and for example, the first frame may be a newly defined frame (such as, a newly defined management frame). The newly defined frame may be used to indicate the information related to the first operating mode of the first device. For example, the newly defined frame may indicate the first information, and the first information may include the information related to the first operating mode of the first device. In some embodiments, the newly defined frame may include the control field, and the control field may be used to carry the first information.

In some embodiments, after the first device is associated with the second device, the first frame may be transmitted from the first device to the second device.

In some embodiments, the first frame may also be used to request the second device to perform an immediate acknowledgement on the first frame. For example, the first frame may also be used to request the immediate acknowledgement for the first information by the second frame.

In the embodiments of the present disclosure, the first information may indicate one or more pieces of the information related to the first operating mode of the first device. Exemplarily, the first information may be used to indicate one or more of the following: enabling/disabling the first operating mode; the operating parameter(s) associated with the first operating mode; a switching manner between the different capability modes of the first device in the awake state.

As an example, the first information may indicate that the first device changes the first operating mode of the first device per se. For example, the first information may indicate that the first device enables/disables the first operating mode.

As another example, the first information may indicate that the first device updates the operating parameter(s) associated with the first operating mode. For example, the first information may indicate the updated operating parameter(s) associated with the first operating mode.

Exemplarily, the first information may indicate that the first device adjusts the operating parameter(s) associated with the low capability mode. The first device may adjust the operating parameter(s) associated with the low capability mode to perform one or more of the following: reception of the initial frame from the second device, reception of the frame from the second device in the low capability mode, and transmission of the frame in the low capability mode. Herein, the operating parameter(s) associated with the low capability mode that is adjustable to the first device may include one or more of the following: the maximum operating bandwidth in the low capability mode, the maximum number of the receive chains in the low capability mode, a supported modulation parameter of the MCS in the low capability mode, the number of receivable space-time/spatial streams in the low capability mode, the number of transmissible space-time/spatial streams in the low capability mode, the maximum data rate in the low capability mode, and the PPDU format that is supported to be received in the low capability mode.

Exemplarily, the first information may indicate that the first device adjusts the operating parameter(s) associated with the high capability mode. The operating parameter(s) associated with the high capability mode that is adjustable to the first device may include one or more of the following: the maximum operating bandwidth in the high capability mode, the maximum number of the receive chains in the high capability mode, a supported modulation parameter of the MCS in the high capability mode, the number of receivable space-time/spatial streams in the high capability mode, the number of transmissible space-time/spatial streams in the high capability mode, the maximum data rate in the high capability mode, and the PPDU format that is supported to be received in the high capability mode.

Exemplarily, the first information may indicate that the first device adjusts a latency parameter for the switching between different capability modes. For example, the first information may indicate the minimum MAC padding duration for an initial frame required for the first device to switch from the low capability mode to the high capability mode, and/or the minimum latency required for the first device to switch from the high capability mode to the low capability mode.

Exemplarily, the first information may indicate that the first device adjusts the mode index corresponding to the low capability mode and/or adjusts the mode index corresponding to the high capability mode.

As yet another example, the first information may indicate the switching manner between different capability modes.

In some embodiments, the switching manner between different capability modes may include a switching manner from the low capability mode to the high capability mode.

In some embodiments, if the high capability mode does not include the full capability mode, the switching manner between different capability modes may include a switching manner from the low capability mode to the full capability mode, or a switching manner from the high capability mode to the full capability mode.

In some embodiments, the switching manner between different capability modes may be determined based on the type of the first operating mode. The description of the type of the first operating mode may be referred to in the foregoing, which is not repeated herein.

In some embodiments, the switching manner between different capability modes may include one or more of the following switching manners 1 to 4.

In the switching manner 1, when the first device receives the second frame (e.g., the initial frame), the first device may switch to the high capability mode for the frame switching, and further return back to the low capability mode after the ending of the current frame switching sequence, to perform the monitoring operation and/or the transceiving operation by using the low capability mode.

The switching manner 1 may correspond to the default operation-based first operating mode. That is, when the first device is in the default operation-based first operating mode, the first device may perform the switching by using the switching manner 1. In some embodiments, the switching manner 1 may also be understood as a default switching manner.

In the switching manner 2, when the first device receives the initial control frame (e.g., the MU-RTS frame), the first device may switch to the high capability mode for the frame switching, and further return back to the low capability mode after the ending of the current frame switching sequence, to perform the monitoring operation and/or the transceiving operation by using the low capability mode. When the first device receives the initial frame (e.g., the QoS null frame) of a non-initial control frame, the first device may determine, based on an indication of the initial frame of the non-initial control frame, whether to switch to the high capability mode for the frame switching in the current frame switching sequence.

The switching manner 2 may correspond to the forced control-based first operating mode. That is, when the first device is in the forced control-based first operating mode, the first device may perform the switching by using the switching manner 2.

In the switching manner 3, the first device may determine, based on the fourth information carried in the second frame (e.g., the initial frame or the trigger frame), whether to switch to the high capability mode for the frame switching in the current frame switching sequence. The fourth information may be imperative indication information. For example, if the fourth information indicates that the first device switches to the high capability mode, the first device may switch to the high capability mode based on the indication of the fourth information. Alternatively, if the fourth information indicates that the first device does not switch to the high capability mode, the first device may not switch to the high capability mode based on the indication of the fourth information.

The switching manner 3 may correspond to the forced control-based first operating mode. That is, when the first device is in the forced control-based first operating mode, the first device may perform the switching by using the switching manner 3.

In the switching manner 4, the first device may respond, based on the second information and/or the third information carried in the second frame, whether to perform the switching based on the request of the second device. For example, the second device may request the first device to switch to the high capability mode. If the first device accepts the switching request, the first device may switch to the high capability mode for the frame switching in the current frame switching sequence; and if the first device rejects the switching request, the first device may maintain the low capability mode for the frame switching in the current frame switching sequence.

The switching manner 4 may correspond to the negotiated control-based first operating mode. That is, when the first device is in the negotiated control-based first operating mode, the first device may perform the switching by using the switching manner 4.

In some embodiments, the switching manner between different capability modes may be pre-negotiated or determined by default.

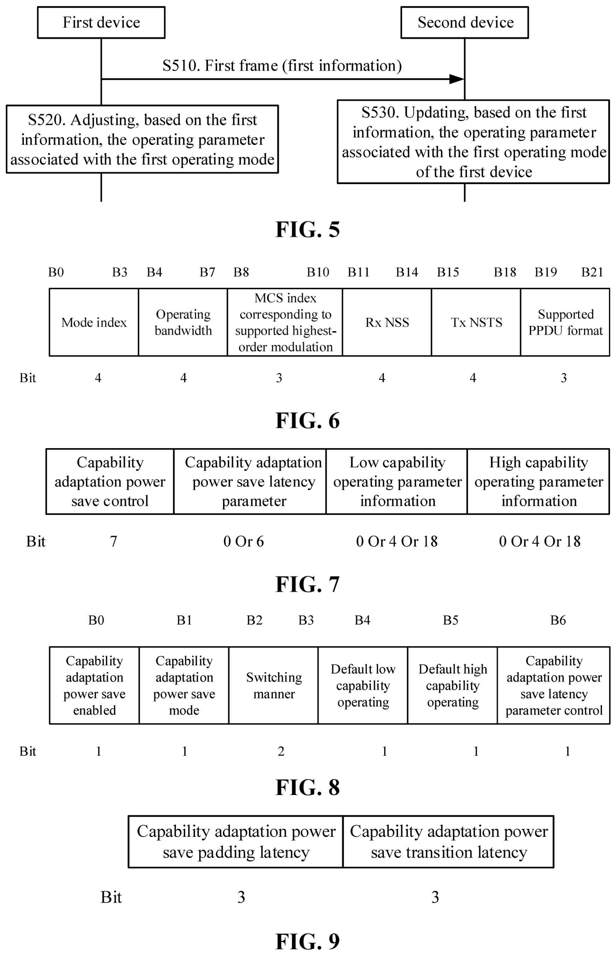

FIG. 5 is another flowchart of a method for wireless communication according to an embodiment of the present disclosure. The method illustrated in FIG. 5 includes operations S510 to S530.

At block S510, the first device transmits the first frame to the second device. The first frame includes the first information.

The description of the operation S510 may be referred to the foregoing description of operation S210. For brevity, details are not described herein again.

At block S520, the first device adjusts, based on the first information, the operating parameter associated with the first operating mode.

In some embodiments, the operating parameter associated with the first operating mode may be effective after a transmission opportunity in which the first device receives, from the second device, the acknowledgement information for the first frame.

In some embodiments, when the operating parameter associated with the first operating mode is adjusted to reduce the capability of the first device (such as, adjusting from the high capability mode to the low capability mode), the operating parameter associated with the first operating mode may be effective after the transmission opportunity in which the first device receives the acknowledgement information for the first frame from the second device.

In some embodiments, the operating parameter associated with the first operating mode may be effective after the transmission opportunity in which the first device receives the acknowledgement information for the first frame from the second device, when one or more of the following conditions are satisfied: enabling the first operating mode, decreasing the operating parameter associated with the first operating mode, and increasing the latency parameter for the switching between different capability modes.

In some embodiments, the operating parameter associated with the first operating mode may be effective after a transmission opportunity in which the first device expects to receive the acknowledgement information for the first frame from the second device.

In some embodiments, when the operating parameter associated with the first operating mode is not adjusted to reduce the capability of the first device, the operating parameter associated with the first operating mode may be effective after the transmission opportunity in which the first device expects to receive the acknowledgement information for the first frame from the second device.

In some embodiments, the operating parameter associated with the first operating mode may be effective after the transmission opportunity in which the first device expects to receive the acknowledgement information for the first frame from the second device, when one or more of the following conditions are not satisfied: enabling the first operating mode, decreasing the operating parameter associated with the first operating mode, and increasing the latency parameter for the switching between different capability modes.

In some embodiments, the condition of decreasing the operating parameter associated with the first operating mode may include one or more of the following: the operating parameter associated with the high capability mode is adjusted to the operating parameter associated with the low capability mode; the operating parameter associated with the high capability mode is adjusted from the higher capability parameter to the lower capability parameter; and the operating parameter associated with the low capability mode is adjusted from the higher capability parameter to the lower capability parameter.

In some embodiments, the condition of increasing the latency parameter for the switching between different capability modes may include one or more of the following: the latency parameter required for the switching from the low capability mode to the high capability mode is increased; and the latency parameter required for the switching from the high capability mode to the low capability mode is increased.

At block S530, the second device updates, based on the first information, the operating parameter associated with the first operating mode of the first device. For example, the second device may update, based on the latest received first information, the operating parameter associated with the first operating mode of the first device.

In some embodiments, after updating, based on the first information, the operating parameter associated with the first operating mode of the first device, the second device may communicate with the first device based on the updated operating parameter. For example, after updating, based on the first information, the operating parameter associated with the first operating mode of the first device, the second device may initiate and perform the frame switching with the first device in the first operating mode.

As an example, the second device may transmit an initial frame (e.g., the initial control frame) to the first device, based on the updated operating parameter (such as, the maximum operating bandwidth in the low capability mode, the supported modulation parameter of the MCS in the low capability mode, the number of receivable spatial streams in the low capability mode, the PPDU format that is supported to be received in the low capability mode), to initiate the frame switching with the first device. Here, the initial frame (e.g., the initial control frame) may satisfy a reception capability requirement of the first device in the low capability mode.

In some embodiments, when the first device is in the dynamic first operating mode, the padding latency of the PPDU of the second frame from the second device may be required to be greater than or equal to the latest received latency parameter for the switching between different capability modes from the first device, to ensure that the first device can switch from the low capability mode to the high capability mode before a time moment of the ending of the transmission of the PPDU.

In some embodiments, when the first device is in the dynamic first operating mode, after the second device transmits the second frame and further receives a response or acknowledgement from the first device, during the frame switching sequence initiated by the second frame, the second device should transmit the frame to the first device, based on the latest received operating parameter associated with the high capability mode (such as, the maximum operating bandwidth in the high capability mode, the supported modulation parameter of the MCS in the high capability mode, the maximum number of receivable spatial streams in the high capability mode, the PPDU format that is supported to be received in the high capability mode). Here, the frame may satisfy a reception capability requirement of the first device in the high capability mode to the first device.

The sequence of execution of the operations S520 and S530 may not be limited in the embodiments of the present disclosure. For example, the operation S520 may be performed before the operation S530; the operation S520 may be performed after the operation S530; or the operations S520 and S530 may be performed simultaneously.

The communication process between the first device and the second device, as well as various frames and information are described in the foregoing. The format of the frame(s) or information involved in the present disclosure is described below.

As described in the foregoing, the first frame may include the control field (e.g., the A-Control field), and the control field may carry the first information. Firstly, the format of the control field included in the first frame is described.

It is to be noted that the names of the various fields or subfields mentioned below are merely examples, which are not intended to limit the embodiments of the present disclosure. The names of following various fields or subfields may be replaced with other names. For example, a capability adaptation power save control subfield may be replaced with a fourth subfield, a capability adaptation power save latency parameter subfield may be replaced with a fifth subfield, and the like.

In a MAC frame format defined in the related technologies (such as, the specification IEEE 802.11), a HT control field may be carried in a QoS data frame, a QoS null frame, a management frame, or a control wrapper frame, and may be determined by the +HTC subfield of the frame control field. The HT control field has a total of 32 bits (bits B0-B31). When both the bit B0 and bit B1 of the bits B0-B31 are set to 1, it may be represented that the HT control field is an HE variant HT control field, and each of the bits B2-B31 may be the A-Control subfield. The A-Control subfield may include a control list subfield and a padding subfield. The "control list" subfield may include one or more control subfields, and each control subfield may include a 4-bit control ID subfield and a variable-length control information subfield. Herein, the control ID subfield may indicate the type of information carried in the "control information" subfield.

In order to carry the first information in the first frame, in the embodiments of the present disclosure, one or more of the following subfields may be defined in the control field of the first frame: a first subfield and a second subfield. Furthermore, in order to carry the second information and/or the third information in the second frame, in the embodiments of the present disclosure, a third subfield may be defined in the control field of the second frame. The first subfield, the second subfield and the third subfield may be the control subfields included in the "control list" subfield. The first subfield, the second subfield and the third subfield are described below with reference to Table 1.

**Table 1**

| Control ID | Name of the control subfield | Definition and application of the control subfield |
|---|---|---|
| Preset value (e.g., 7) | First subfield | Used to define the operating parameter(s) that may be used by the first device after the first device enables (or enters) the first operating mode, such as, the operating parameter(s) associated with the low capability mode, the operating parameter(s) associated with high capability mode |
| Preset value (e.g., 8) | Second subfield | Used for the first device to instruct to change the first operating mode, such as, to enable/disable the first operating mode, update the operating parameter(s) associated with the first operating mode |
| Preset value (e.g., 9) | Third subfield | Used to indicate whether the first device in the first operating mode switches, after receiving the second frame, from the low capability mode to the high capability mode (or the full capability mode) in the current frame switching sequence |

The first subfield may be used to indicate the operating parameter(s) associated with the first operating mode. Alternatively, the first subfield may be used to define the operating parameter(s) that can be used by the first device after the first device enables (or enters) the first operating mode, such as, the operating parameter(s) associated with low capability mode, and the operating parameter(s) associated with the high capability mode. In some embodiments, the first subfield may be referred to as a first operating mode parameter control subfield.

As a possible implementation, the first subfield may indicate a mode index and the operating parameter(s) associated with the mode index. The mode index may be used to identify different capability modes included in the first operating mode. For example, the mode index may be used to identify the low capability mode or the high capability mode. Alternatively, the mode index may be used to identify the operating parameter(s) associated with the low capability mode or the operating parameter(s) associated with the high capability mode. For another example, the mode index may be used to identify the operating parameter(s) with different gears, and the description of the operating parameter(s) with different gears may be referred to the foregoing. As an example, the mode index of 0 may indicate the operating parameter with the gear 1; the mode index of 1 may indicate the operating parameter with the gear 2; the mode index of 2 may indicate the operating parameter with the gear 3. Herein, the operating parameters with the gear 1 and the gear 2 may be the operating parameters associated with the low capability mode, and the operating parameter with the gear 3 may be the operating parameter associated with the high capability mode.

FIG. 6 illustrates an example diagram of a possible format of the first subfield. As illustrated in FIG. 6, the first subfield may include a mode index and the operating parameter(s) associated with the mode index, such as, the mode index, the operating bandwidth associated with the mode index, the modulation parameter of the MCS associated with the mode index, the number of receivable space-time/spatial streams associated with the mode index, the number of transmissible space-time/spatial streams associated with the mode index, the PPDU format that is supported to be received associated with the mode index, etc.

A mode index subfield may be used to indicate an identification of a capability mode included in the first operating mode defined by the first subfield. In some embodiments, the mode index subfield may occupy 4 bits, which, however, is not limited in the embodiments of the present disclosure, and the mode index subfield may occupy another number of bits.

The operating bandwidth subfield may indicate an operating bandwidth supported by the first device for reception and/or transmission in the first operating mode indicated by the mode index. In some embodiments, the operating bandwidth subfield may occupy 4 bits, which, however, is not limited in the embodiments of the present disclosure, and the operating bandwidth subfield may occupy another number of bits. The encoding manner for the operating bandwidth subfield may not be limited in the embodiments of the present disclosure. For example, the following encoding manner may be used for the operating bandwidth subfield, in which: the operating bandwidth subfield is set to be 0 for 20 MHz; the operating bandwidth subfield is set to be 1 for 40 MHz; the operating bandwidth subfield is set to be 2 for 80 MHz; the operating bandwidth subfield is set to be 3 for 160 MHz and 80+80 MHz; the operating bandwidth subfield is set to be 4 for 320 MHz; and other values are reserved. For another example, the following encoding manner may be used for the operating bandwidth subfield, in which: the operating bandwidth subfield is set to be 0 for 20 MHz; the operating bandwidth subfield is set to be 1 for 40 MHz; the operating bandwidth subfield is set to be 2 for 80 MHz; the operating bandwidth subfield is set to be 3 for 160 MHz; the operating bandwidth subfield is set to be 4 for 80+80 MHz; the operating bandwidth subfield is set to be 5 for 320 MHz; and other values are reserved.

An MCS index subfield corresponding to the supported highest-order modulation may be used to indicate an MCS index corresponding to the highest-order modulation supported by the first device in the first operating mode that is indicated by the mode index. In some embodiments, the MCS index subfield corresponding to the supported highest-order modulation may occupy 3 bits, which, however, is not limited in the embodiments of the present disclosure, and the MCS index subfield corresponding to the supported highest-order modulation may occupy another number of bits. The encoding manner for the MCS index subfield corresponding to the supported highest-order modulation may not be limited in the embodiments of the present disclosure. For example, the following encoding manner may be used for the MCS index subfield corresponding to the supported highest-order modulation, in which: the MCS index subfield corresponding to the supported highest-order modulation is set to be 0 for Binary Phase Shift Keying (BPSK), the MCS index subfield corresponding to the supported highest-order modulation is set to be 1 for Quadrature Phase Shift Keying (QPSK), the MCS index subfield corresponding to the supported highest-order modulation is set to be 2 for 16 Quadrature Amplitude Modulation (16-QAM), ..., the MCS index subfield corresponding to the supported highest-order modulation is set to be 6 for 2048-QAM, and the MCS index subfield corresponding to the supportable highest-order modulation is set to be 7 for 4096-QAM. For another example, the following encoding manner may be used for the MCS index subfield corresponding to the supported highest-order modulation, in which: the MCS index subfield corresponding to the supported highest-order modulation is set to be 0 for the QPSK, the MCS index subfield corresponding to the supported highest-order modulation is set to be 1 for the BPSK, the MCS index subfield corresponding to the supported highest-order modulation is set to be 2 for the 16-QAM, ..., the MCS index subfield corresponding to the supported highest-order modulation is set to be 6 for the 2048-QAM, and the MCS index subfield corresponding to the supported highest-order modulation is set to be 7 for the 4096-QAM.

An Rx NSS subfield may be used to indicate the maximum Number of Spatial Streams (NSS) for the reception supported by the first device in the first operating mode that is indicated by the mode index. As a possible implementation, the value of the Rx NSS may be set to be NSS minus 1. In some embodiments, the Rx NSS subfield may occupy 4 bits, which, however, is not limited in the embodiments of the present disclosure, and the Rx NSS subfield may occupy another number of bits.

A Tx NSTS subfield may be used to indicate the maximum Number of Space-time Streams (NSTS) for the transmission supported by the first device in the first operating mode that is indicated by the mode index. As a possible implementation, the value of the Tx NSTS may be set to be NSTS minus 1. In some embodiments, the Tx NSTS subfield may occupy 4 bits, which, however, is not limited in the embodiments of the present disclosure, and the Tx NSTS subfield may occupy another number of bits.

The supported PPDU format subfield may be used to indicate a PPDU format supported to be received and/or transmitted by the first device in the first operating mode that is indicated by the mode index. In some embodiments, the supported PPDU format subfield may occupy 3 bits, which, however, is not limited in the embodiments of the present disclosure, and the supported PPDU format subfield may occupy another number of bits. The encoding manner for the supported PPDU format subfield may not be limited in the embodiments of the present disclosure, and a possible encoding manner is provided below in combination with Table 2.

**Table 2**

| Encoding of the supported PPDU format subfield | Definition of the supported PPDU format subfield |
|---|---|
| 0 | non-HT PPDU or non-HT duplicate PPDU |
| 1 | HT PPDU |
| 2 | HE PPDU |
| 3 | EHT PPDU |
| 4 | UHR PPDU |
| Others | Reserved |

As illustrated in Table 2, the supported PPDU format subfield is set to be 0 for the non-HT PPDU or non-HT duplicate PPDU, the supported PPDU format subfield is set to be 1 for the HT PPDU, the supported PPDU format subfield is set to be 2 for the HE PPDU, the supported PPDU format subfield is set to be 3 for the Extremely High Throughput (EHT) PPDU, the supported PPDU format subfield is set to be 4 for the Ultra High Reliability (UHR) PPDU, and other values are reserved. However, the encoding manner for the supported PPDU format subfield may not be limited in the embodiments of the present disclosure. For example, the supported PPDU format subfield may be set to be 0 for the HT PPDU, the supported PPDU format subfield may be set to be 1 for the HE PPDU, the supported PPDU format subfield may be set to be 2 for the non-HT PPDU or the non-HT duplicate PPDU, the supported PPDU format subfield may be set to be 3 for the EHT PPDU, the supported PPDU format subfield may be set to be 4 for the UHR, and other values may be reserved, etc.

In some embodiments, when the processing capability requirement for a certain PPDU format is less than or equal to the supported PPDU format indicated by the first device, it may be represented that the first device also supports the reception and/or transmission of such PPDU format.

The second subfield may be used for the first device to instruct to change the first operating mode, such as, to enable/disable the first operating mode, update the operating parameter(s) associated with the first operating mode, and the like. In some embodiments, the second subfield may be referred to as the first operating mode control subfield.

In some embodiments, the second subfield may be used to indicate one or more of the following: enabling/disabling the first operating mode, the latency parameter for switching between different capability modes, and the operating parameter(s) associated with the first operating mode.

In some embodiments, the second subfield may use the mode index to indicate the operating parameter(s) associated with the first operating mode. In such way, the second device may determine, based on the mode index, the first operating mode indicated by the first device. For example, the second device may determine, based on the mode index and the first subfield, the first operating mode indicated by the first device.

FIG. 7 illustrates an example diagram of a possible format of the second subfield. As illustrated in FIG. 7, the second subfield may include one or more of the following subfields: a capability adaptation power save control subfield, a capability adaptation power save latency parameter subfield, a low capability operating parameter information subfield, and a high capability operating parameter information subfield.

In some embodiments, the capability adaptation power save control subfield may occupy 7 bits, which, however, is not limited in the embodiments of the present disclosure, and the capability adaptation power save control subfield may occupy another number of bits.

FIG. 8 illustrates an example diagram of a possible format of the capability adaptation power save control subfield. As illustrated in FIG. 8, the capability adaptation power save control subfield may include one or more of the following subfields: a capability adaptation power save enabled subfield, a capability adaptation power save mode subfield, a switching manner subfield, a default low capability operating subfield, a default high capability operating subfield, and a capability adaptation power save latency parameter control subfield.

The capability adaptation power save enabled subfield may be used to indicate whether the first device enables the first operating mode. In some embodiments, the capability adaptation power save enabled subfield may occupy 1 bit. As an implementation, the value of the capability adaptation power save enabled subfield of 1 may represent that the first device enables the first operating mode; and the value of the capability adaptation power save enabled subfield of 0 may represent that the first device disables (de-enables) the first operating mode, i.e., the function of the first operating mode is turned off. As another implementation, the value of the capability adaptation power save enabled subfield of 1 may represent that the first device disables the first operating mode; and the value of the capability adaptation power save enabled subfield of 0 may represent that the first device enables the first operating mode, which, however, is not limited in the embodiments of the present disclosure. For example, the capability adaptation power save enabled subfield may use multiple bits to indicate whether the first device enables the first operating mode.

The capability adaptation power save mode subfield may be used to indicate the type of the first operating mode. In some embodiments, the capability adaptation power save mode subfield may occupy 1 bit. As an implementation, when the capability adaptation power save mode subfield is set to be 1, the dynamic first operating mode may be indicated; and when the capability adaptation power save mode subfield is set to be 0, the static first operating mode may be indicated. As another implementation, when the capability adaptation power save mode subfield is set to be 1, the static first operating mode may be indicated; and when the capability adaptation power save mode subfield is set to be 0, the dynamic first operating mode may be indicated. However, the embodiments of the present disclosure are not limited thereto. For example, the capability adaptation power save mode subfield may use multiple bits to indicate the type of the first operating mode.

The switching manner subfield may be used to indicate the switching manner between different capability modes of the first device in the dynamic first operating mode. In some embodiments, the switching manner subfield may occupy 2 bits, which, however, is not limited in the embodiments of the present disclosure, and the switching manner subfield may occupy another number of bits. As an implementation, when the switching manner subfield is set to be 0, the switching manner 1 may be indicated; when the switching manner subfield is set to be 1, the switching manner 2 may be indicated; when the switching manner subfield is set to be 2, the switching manner 3 may be indicated; and when the switching manner subfield is set to be 3, the switching manner 4 may be indicated. The description of the switching manner between different capability modes may be referred to the foregoing. However, the embodiments of the present disclosure are not limited thereto. For example, when the switching manner subfield is set to be 0, the switching manner 2 may be indicated; when the switching manner subfield is set to be 1, the switching manner 3 may be indicated; when the switching manner subfield is set to be 2, the switching manner 4 may be indicated; and when the switching manner subfield is set to be 3, the switching manner 1 may be indicated.

The default low capability operating subfield may be used to indicate whether the default low capability mode is used. In some embodiments, the default low capability operating subfield may occupy 1 bit. As an implementation, if the default low capability mode is used by the first device, the default low capability operating subfield may be set to be 1; otherwise, the default low capability operating subfield may be set to be 0. As another implementation, if the default low capability mode is used by the first device, the default low capability operating subfield may be set to be 0; otherwise, the default low capability operating subfield may be set to be 1. However, the embodiments of the present disclosure are not limited thereto. For example, multiple bits may be used by the default low capability operating subfield to indicate whether the default low capability mode is used.

The default low capability mode may not be limited in the embodiments of the present disclosure, or the operating parameter(s) associated with the default low capability mode may not be limited in the embodiments of the present disclosure. As an implementation, the default low capability operating mode may be specified as: the monitoring capability including the CCA and the reception of the initial frame for the frame switching that is initiated by the second device; the operating bandwidth of 20MHz, the receivable non-HT PPDU or non-HT duplicate PPDU, and the supportable rate of 6 Mb/s, 12Mb/s or 24Mb/s. As another implementation, the default low capability operating mode may be specified to have: the monitoring capability including the CCA and the reception of the initial frame for the frame switching that is initiated by the second device; the operating bandwidth of 40 MHz, the receivable HT PPDU, and the supportable rate of 6 Mb/s, 12 Mb/s or 24 Mb/s.

In some embodiments, when the default low capability operating subfield is indicated to be 0, the low capability operating parameter information subfield may exist in the capability adaptation power save operating mode control subfield, and the operating parameter(s) indicated by the low capability operating parameter information subfield may be used in the low capability mode.

The default high capability operating subfield may be used to indicate whether the default high capability mode is used. In some embodiments, the default high capability operating subfield may occupy 1 bit. As an implementation, if the default high capability mode is used by the first device, the default high capability operating subfield may be set to be 1; otherwise, the default high capability operating subfield may be set to be 0. As another implementation, if the default high capability mode is used by the first device, the default high capability operating subfield may be set to be 0; otherwise, the default high capability operating subfield may be set to be 1. However, the embodiments of the present disclosure are not limited thereto. For example, multiple bits may be used by the default high capability operating subfield to indicate whether the default high capability mode is used.

The default high capability mode may not be limited in the embodiments of the present disclosure, or the operating parameter(s) associated with the default high capability mode may not be limited in the embodiments of the present disclosure. As an implementation, the default high capability mode may be specified as the full capability mode. That is, the capability corresponding to the first operating mode indicated by the first device, may include one or more of the following: a capability corresponding to a capability element (e.g., a UHR capability element) carried at the time of association, a capability corresponding to a switched operating mode notification frame, and a capability corresponding to the first operating mode defined by the first frame. As another implementation, the default high capability mode may be specified as: the monitoring capability including the CCA and the reception of the initial frame for the frame switching that is initiated by the second device; the operating bandwidth of 160 MHz, the receivable EHT PPDU, and the supportable rate of 24 Mb/s, 36 Mb/s, or 48 Mb/s.

In some embodiments, when the default high capability operating subfield is indicated to be 0, the high capability operating parameter information subfield may exist in the capability adaptation power save operating mode control subfield, and the operating parameter(s) indicated by the high capability operating parameter information subfield may be used in the high capability operating mode.

The capability adaptation power save latency parameter control subfield may be used to indicate whether the capability adaptation power save latency parameter field exists in the capability adaptation power save operating mode control subfield. In some embodiments, the capability adaptation power save latency parameter control subfield may occupy 1 bit. As an implementation, when the capability adaptation power save mode subfield is equal to 1, and the capability adaptation power save latency parameter field exists in the capability adaptation power save operating mode control subfield, the capability adaptation power save control subfield may be set to be 1; otherwise, the capability adaptation power save control subfield may be set to be 0.

The format of the capability adaptation power save control subfield is described in the foregoing with reference to FIG. 8, and the format of the capability adaptation power save latency parameter subfield is described below with reference to FIG. 9.

As illustrated in FIG. 9, the capability adaptation power save latency parameter subfield may include one or more of the following subfields: a capability adaptation power save padding latency subfield and a capability adaptation power save transition latency subfield.

The capability adaptation power save padding latency subfield may be used to indicate the minimum MAC padding duration of the initial frame that is requested by the first device. For example, the capability adaptation power save padding latency subfield may indicate the minimum MAC padding duration of the initial frame required for the switching from the low capability mode to the high capability mode (or the full capability mode) that is requested by the first device. In some embodiments, the capability adaptation power save padding latency subfield may occupy 3 bits, which, however, is not limited in the embodiments of the present disclosure, and the capability adaptation power save padding latency subfield may occupy another number of bits. An encoding manner for the capability adaptation power save padding latency subfield may not be limited in the embodiments of the present disclosure. A possible encoding manner is provided below in combination with Table 3.

**Table 3**

| Encoding of the capability adaptation power save padding latency subfield | Capability adaptation power save padding latency |
|---|---|
| 0 | 0 µs |
| 1 | 32 µs |
| 2 | 64 µs |
| 3 | 128 µs |
| 4 | 256 µs |
| 5-7 | Reserved |

As illustrated in Table 3, the capability adaptation power save padding latency subfield is set to be 0 for 0 µs, the capability adaptation power save padding latency subfield is set to be 1 for 32 µs, the capability adaptation power save padding latency subfield is set to be 2 for 64 µs, the capability adaptation power save padding latency subfield is set to be 3 for 128 µs, the capability adaptation power save padding latency subfield is set to be 4 for 256 µs, and other values are reserved. However, the encoding manner for the capability adaptation power save padding latency subfield may not be limited in the embodiments of the present disclosure. For example, the capability adaptation power save padding latency subfield may be set to be 0 for 32 µs, the capability adaptation power save padding latency subfield may be set to be 1 for 64 µs, the capability adaptation power save padding latency subfield may be set to be 2 for 128 µs, the capability adaptation power save padding latency subfield may be set to be 3 for 256 µs, the capability adaptation power save padding latency subfield may be set to be 4 for 512 µs, and other values may be reserved, etc.

The capability adaptation power save transition latency subfield may be used to indicate the minimum latency required for the switching from the high capability mode (or the full capability mode) to the low capability mode, when the first device is in the first operating mode. In some embodiments, the capability adaptation power save transition latency subfield may occupy 3 bits, which, however, is not limited in the embodiments of the present disclosure, and the capability adaptation power save transition latency subfield may occupy another number of bits. An encoding manner for the capability adaptation power save transition latency subfield may not be limited in the embodiments of the present disclosure. A possible encoding manner is provided below in combination with Table 4.

**Table 4**

| Encoding of the capability adaptation power save transition latency subfield | Capability adaptation power save transition latency |
|---|---|
| 0 | 0 µs |
| 1 | 32 µs |
| 2 | 64 µs |
| 3 | 128 µs |
| 4 | 256 µs |
| 5-7 | Reserved |

As illustrated in Table 4, the capability adaptation power save transition latency subfield is set to be 0 for 0 µs, the capability adaptation power save transition latency subfield is set to be 1 for 32 µs, the capability adaptation power save transition latency subfield is set to be 2 for 64 µs, the capability adaptation power save transition latency subfield is set to be 3 for 128 µs, the capability adaptation power save transition latency subfield is set to be 4 for 256 µs, and other values are reserved. However, the encoding manner for the capability adaptation power save transition latency subfield may not be limited in the embodiments of the present disclosure. For example, the capability adaptation power save transition latency subfield may be set to be 0 for 32 µs, the capability adaptation power save transition latency subfield may be set to be 1 for 64 µs, the capability adaptation power save transition latency subfield may be set to be 2 for 128 µs, the capability adaptation power save transition latency subfield may be set to be 3 for 256 µs, the capability adaptation power save transition latency subfield may be set to be 4 for 512 µs, and other values may be reserved, etc.

Hereinafter, the low capability operating parameter information subfield and the high capability operating parameter information subfield are described respectively.

In some embodiments, the low capability operating parameter information subfield may be indicated by using the mode index. The mode index may be used to indicate the operating parameter corresponding to the mode index defined by the capability adaptation power save operating mode parameter control subfield that carries the mode index. For example, if the capability adaptation power save operating mode parameter control subfield defines that the operating parameter corresponding to the mode index of 0 is A, the operating parameter corresponding to the mode index of 1 is B, the operating parameter corresponding to the mode index of 2 is C, and the like, the operating parameter corresponding to the low capability mode may be indicated to be A when the value of the low capability operating parameter information subfield is 0; and the operating parameter corresponding to the low capability mode may be indicated to be B when the value of the low capability operating parameter information subfield is 1, and the like.

In some embodiments, the high capability operating parameter information subfield may be indicated by using the mode index. The mode index may be used to indicate the operating parameter corresponding to the mode index defined by the capability adaptation power save operating mode parameter control subfield that carries the mode index. For example, if the capability adaptation power save operating mode parameter control subfield defines that the operating parameter corresponding to the mode index of 0 is A, the operating parameter corresponding to the mode index of 1 is B, the operating parameter corresponding to the mode index of 2 is C, and the like, the operating parameter corresponding to the high capability mode may be indicated to be A when the value of the high capability operating parameter information subfield is 0; and the operating parameter corresponding to the high capability mode may be indicated to be B when the value of the high capability operating parameter information subfield is 1, and the like.

In some embodiments, the low capability operating parameter information subfield may be indicated by using a low capability operating mode parameter subfield. The format of the low capability operating mode parameter subfield is exemplarily described below.

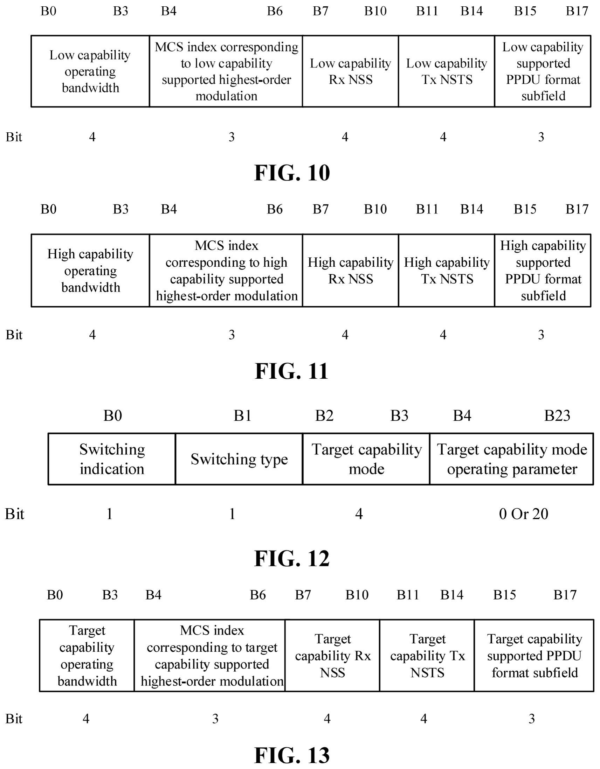

FIG. 10 illustrates an example diagram of a possible format of the low capability operating mode parameter subfield. As illustrated in FIG. 10, the low capability operating mode parameter subfield may include one or more of the following subfields: a low capability operating bandwidth subfield, an MCS index subfield corresponding to low capability supported highest-order modulation, a low capability Rx NSS subfield, a low capability Tx NSTS subfield, and a low capability supported PPDU format subfield.

The low capability operating bandwidth subfield may indicate an operating bandwidth supported by the first device for reception and/or transmission in the low capability mode. In some embodiments, the low capability operating bandwidth subfield may occupy 4 bits, which, however, is not limited in the embodiments of the present disclosure, and the low capability operating bandwidth subfield may occupy another number of bits. The encoding manner for the low capability operating bandwidth subfield may not be limited in the embodiments of the present disclosure. For example, the following encoding manner may be used for the low capability operating bandwidth subfield, in which: the low capability operating bandwidth subfield is set to be 0 for 20 MHz, the low capability operating bandwidth subfield is set to be 1 for 40 MHz; the low capability operating bandwidth subfield is set to be 2 for 80 MHz; the low capability operating bandwidth subfield is set to be 3 for 160 MHz and 80+80 MHz; the low capability operating bandwidth subfield is set to be 4 for 320 MHz; and other values are reserved. For another example, the following encoding manner may be used for the low capability operating bandwidth subfield, in which: the low capability operating bandwidth subfield is set to be 0 for 20 MHz; the low capability operating bandwidth subfield is set to be 1 for 40 MHz; the low capability operating bandwidth subfield is set to be 2 for 80 MHz; the low capability operating bandwidth subfield is set to be 3 for 160 MHz; the low capability operating bandwidth subfield is set to be 4 for 80+80 MHz; the low capability operating bandwidth subfield is set to be 5 for 320 MHz; and other values are reserved.

The MCS index subfield corresponding to the low capability supported highest-order modulation may be used to indicate an MCS index corresponding to the highest-order modulation supported by the first device in the low capability mode. In some embodiments, the MCS index subfield corresponding to the low capability supported highest-order modulation may occupy 3 bits, which, however, is not limited in the embodiments of the present disclosure, and the MCS index subfield corresponding to the low capability supported highest-order modulation may occupy another number of bits. The encoding manner for the MCS index subfield corresponding to the low capability supported highest-order modulation may not be limited in the embodiments of the present disclosure. For example, the following encoding manner may be used for the MCS index subfield corresponding to the low capability supported highest-order modulation, in which: the MCS index subfield corresponding to the low capability supported highest-order modulation is set to be 0 for the BPSK, the MCS index subfield corresponding to the low capability supported highest-order modulation is set to be 1 for the QPSK, the MCS index subfield corresponding to the low capability supported highest-order modulation is set to be 2 for the 16-QAM, ..., the MCS index subfield corresponding to the low capability supported highest-order modulation is set to be 6 for the 2048-QAM, and the MCS index subfield corresponding to the low capability supported highest-order modulation is set to be 7 for the 4096-QAM. For another example, the following encoding manner may be used for the MCS index subfield corresponding to the low capability supported highest-order modulation, in which: the MCS index subfield corresponding to the low capability supported highest-order modulation is set to be 0 for the QPSK, the MCS index subfield corresponding to the low capability supported highest-order modulation is set to be 1 for the BPSK, the MCS index subfield corresponding to the low capability supported highest-order modulation is set to be 2 for the 16-QAM, ..., the MCS index subfield corresponding to the low capability supported highest-order modulation is set to be 6 for the 2048-QAM, and the MCS index subfield corresponding to the low capability supported highest-order modulation is set to be 7 for the 4096-QAM.

The low capability Rx NSS subfield may be used to indicate the maximum NSS for the reception supported by the first device in the low capability mode. As a possible implementation, the value of the low capability Rx NSS may be set to be NSS minus 1. In some embodiments, the low capability Rx NSS subfield may occupy 4 bits, which, however, is not limited in the embodiments of the present disclosure, and the low capability Rx NSS subfield may occupy another number of bits.

The low capability Tx NSTS subfield may be used to indicate the maximum NSTS for the transmission supported by the first device in the low capability mode. As a possible implementation, the value of the low capability Tx NSTS may be set to be NSTS minus 1. In some embodiments, the low capability Tx NSTS subfield may occupy 4 bits, which, however, is not limited in the embodiments of the present disclosure, and the low capability Tx NSTS subfield may occupy another number of bits.

The low capability supported PPDU format subfield may be used to indicate a PPDU format supported to be received and/or transmitted by the first device in the low capability mode. In some embodiments, the low capability supported PPDU format subfield may occupy 3 bits, which, however, is not limited in the embodiments of the present disclosure, and the low capability supported PPDU format subfield may occupy another number of bits. The encoding manner for the low capability supported PPDU format subfield may not be limited in the embodiments of the present disclosure. The related description of the encoding manner for the low capability supported PPDU format subfield may be referred to the aforementioned related description in Table 2.

In some embodiments, the high capability operating parameter information subfield may be indicated by using a high capability operating mode parameter subfield. The format of the high capability operating mode parameter subfield is exemplarily described below.

FIG. 11 illustrates an example diagram of a possible format of the high capability operating mode parameter subfield. As illustrated in FIG. 11, the high capability operating mode parameter subfield may include one or more of the following subfields: a high capability operating bandwidth subfield, an MCS index subfield corresponding to high capability supported highest-order modulation, a high capability Rx NSS subfield, a high capability Tx NSTS subfield, and a high capability supported PPDU format subfield.

The high capability operating bandwidth subfield may indicate an operating bandwidth supported by the first device for reception and/or transmission in the high capability mode. In some embodiments, the high capability operating bandwidth subfield may occupy 4 bits, which, however, is not limited in the embodiments of the present disclosure, and the high capability operating bandwidth subfield may occupy another number of bits. The encoding manner for the high capability operating bandwidth subfield may not be limited in the embodiments of the present disclosure. For example, the following encoding manner may be used for the high capability operating bandwidth subfield, in which: the high capability operating bandwidth subfield is set to be 0 for 20 MHz, the high capability operating bandwidth subfield is set to be 1 for 40 MHz; the high capability operating bandwidth subfield is set to be 2 for 80 MHz; the high capability operating bandwidth subfield is set to be 3 for 160 MHz and 80+80 MHz; the high capability operating bandwidth subfield is set to be 4 for 320 MHz; and other values are reserved. For another example, the following encoding manner may be used for the high capability operating bandwidth subfield, in which: the high capability operating bandwidth subfield is set to be 0 for 20 MHz; the high capability operating bandwidth subfield is set to be 1 for 40 MHz; the high capability operating bandwidth subfield is set to be 2 for 80 MHz; the high capability operating bandwidth subfield is set to be 3 for 160 MHz; the high capability operating bandwidth subfield is set to be 4 for 80+80 MHz; the high capability operating bandwidth subfield is set to be 5 for 320 MHz; and other values are reserved.

The MCS index subfield corresponding to the high capability supported highest-order modulation may be used to indicate an MCS index corresponding to the highest-order modulation supported by the first device in the high capability mode. In some embodiments, the MCS index subfield corresponding to the high capability supported highest-order modulation may occupy 3 bits, which, however, is not limited in the embodiments of the present disclosure, and the MCS index subfield corresponding to the high capability supported highest-order modulation may occupy another number of bits. The encoding manner for the MCS index subfield corresponding to the high capability supported highest-order modulation may not be limited in the embodiments of the present disclosure. For example, the following encoding manner may be used for the MCS index subfield corresponding to the high capability supported highest-order modulation, in which: the MCS index subfield corresponding to the high capability supported highest-order modulation is set to be 0 for the BPSK, the MCS index subfield corresponding to the high capability supported highest-order modulation is set to be 1 for the QPSK, the MCS index subfield corresponding to the high capability supported highest-order modulation is set to be 2 for the 16-QAM, ..., the MCS index subfield corresponding to the high capability supported highest-order modulation is set to be 6 for the 2048-QAM, and the MCS index subfield corresponding to the high capability supported highest-order modulation is set to be 7 for the 4096-QAM. For another example, the following encoding manner may be used for the MCS index subfield corresponding to the high capability supported highest-order modulation, in which: the MCS index subfield corresponding to the high capability supported highest-order modulation is set to be 0 for the QPSK, the MCS index subfield corresponding to the high capability supported highest-order modulation is set to be 1 for the BPSK, the MCS index subfield corresponding to the high capability supported highest-order modulation is set to be 2 for the 16-QAM, ..., the MCS index subfield corresponding to the high capability supported highest-order modulation is set to be 6 for the 2048-QAM, and the MCS index subfield corresponding to the high capability supported highest-order modulation is set to be 7 for the 4096-QAM.

The high capability Rx NSS subfield may be used to indicate the maximum NSS for the reception supported by the first device in the high capability mode. As a possible implementation, the value of the high capability Rx NSS may be set to be NSS minus 1. In some embodiments, the high capability Rx NSS subfield may occupy 4 bits, which, however, is not limited in the embodiments of the present disclosure, and the high capability Rx NSS subfield may occupy another number of bits.

The high capability Tx NSTS subfield may be used to indicate the maximum NSTS for the transmission supported by the first device in the high capability mode. As a possible implementation, the value of the high capability Tx NSTS may be set to be NSTS minus 1. In some embodiments, the high capability Tx NSTS subfield may occupy 4 bits, which, however, is not limited in the embodiments of the present disclosure, and the high capability Tx NSTS subfield may occupy another number of bits.

The high capability supported PPDU format subfield may be used to indicate a PPDU format supported to be received and/or transmitted by the first device in the high capability mode. In some embodiments, the high capability supported PPDU format subfield may occupy 3 bits, which, however, is not limited in the embodiments of the present disclosure, and the high capability supported PPDU format subfield may occupy another number of bits. The encoding manner for the high capability supported PPDU format subfield may not be limited in the embodiments of the present disclosure. The related description of the encoding manner for the high capability supported PPDU format subfield may be referred to the aforementioned related description in Table 2.

The third subfield may be used to indicate whether the first device in the first operating mode switches, after receiving the second frame, from the low capability mode to the high capability mode (or the full capability mode) in the current frame switching sequence. In some embodiments, the third subfield may be referred to as a first operating mode switching control subfield.

In some embodiments, the third subfield may be as one control subfield included in the A-Control subfield and carried in the HE variant HT control field.

In some embodiments, the third subfield may be carried in the second frame.

In some embodiments, the control information subfield of the third subfield may include switching information, to indicate whether the first device in the first operating mode switches, after receiving the second frame, from the low capability mode to the high capability mode (or the full capability mode) in the current frame switching sequence.

In some embodiments, the third subfield may be used to indicate one or more of the following: whether the first device switches the capability mode, the switching manner between different capability modes, the target capability mode to which the first device switches, and the operating parameter(s) associated with the target capability mode to which the first device switches.

FIG. 12 illustrates an example diagram of a possible format of the third subfield. As illustrated in FIG. 12, the third subfield (e.g., the control information subfield of the third subfield) may include one or more of the following subfields: a switching indication subfield, a switching type subfield, a target capability mode subfield, and a target capability mode operating parameter subfield.

The switching indication subfield may be used to indicate whether the first device transitions from the low capability mode to the high capability mode (or the full capability mode) in the current frame switching sequence. In some embodiments, the switching indication subfield may occupy 1 bit. As an implementation, when the value of the switching indication subfield is 1, it may be represented that the first device transitions from the low capability mode to the high capability mode (or the full capability mode) in the current frame switching sequence; and when the value of the switching indication subfield is 0, it may be represented that the switching is not required. As another implementation, when the value of the switching indication subfield is 0, it may be represented that the first device transitions from the low capability mode to the high capability mode (or the full capability mode) in the current frame switching sequence; and when the value of the switching indication subfield is 1, it may be represented that the switching is not required. However, the embodiments of the present disclosure are not limited thereto. For example, the switching indication subfield may occupy multiple bits to indicate whether to switch from the low capability mode to the high capability mode (or the full capability mode) in the current frame switching sequence.

The switching type subfield may be used to indicate the type of the switching, or, the type of the first operating mode associated with the switching. In some embodiments, the switching type subfield may occupy 1 bit. As an implementation, when the value of the switching type subfield is 0, the current switching may be indicated to be a forced control-based switching; that is, the switching type subfield may carry the forced switching indication information, and the first device may determine, when receiving the switching indication subfield, whether to switch according to the information indicated by the switching indication subfield. When the value of the switching type subfield is 1, the current switching may be indicated to be a negotiated control-based switching; that is, the switching type subfield may carry the requested switching indication information, and the first device may accept or reject, when receiving the switching indication subfield, the requested switching indication. As another implementation, when the value of the switching type subfield is 1, the current switching may be indicated to be the forced control-based switching; that is, the switching type subfield may carry the forced switching indication information, and the first device may determine, when receiving the switching indication subfield, whether to switch according to the information indicated by the switching indication subfield. When the value of the switching type subfield is 0, the current switching may be indicated to be the negotiated control-based switching; that is, the switching type subfield may carry the requested switching indication information, and the first device may accept or reject, when receiving the switching indication subfield, the requested switching indication. However, the embodiments of the present disclosure are not limited thereto. For example, the switching indication subfield may occupy multiple bits to indicate the type of the switching or the type of the first operating mode associated with the switching.

The target capability mode subfield may be used to indicate whether the switched target capability mode is the high capability mode or the full capability mode. In some embodiments, the target capability mode subfield may occupy 2 bits. However, the embodiments of the present disclosure are not limited thereto. For example, the target capability mode subfield may occupy another number of bits. An encoding manner for the target capability mode subfield may not be limited in the embodiments of the present disclosure. As an implementation, when the value of the target capability mode subfield is 0, the target capability mode may be indicated to be the high capability mode; when the value of the target capability mode subfield is 1, the target capability mode may be indicated to be the full capability mode; and when the value of the target capability mode subfield is 2, the operating parameter(s) associated with the target capability mode may be indicated by the target capability mode operating parameter subfield carried in the capability adaptation power save mode switching control subfield.

The target capability mode operating parameter subfield may be used to indicate the operating parameter(s) associated with the target capability mode. In some embodiments, the target capability mode operating parameter subfield may be carried in the third subfield. In some embodiments, the target capability mode operating parameter subfield may be carried in a capability adaptation power save mode switching response subfield, which is described below and not be described in detail herein.

FIG. 13 illustrates an example diagram of a possible format of the target capability mode operating parameter subfield. As illustrated in FIG. 13, the target capability mode operating parameter subfield may include one or more of the following subfields: a target capability operating bandwidth subfield, an MCS index subfield corresponding to target capability supported highest-order modulation, a target capability Rx NSS subfield, a target capability Tx NSTS subfield, and a target capability supported PPDU format subfield.

The target capability operating bandwidth subfield may indicate an operating bandwidth supported by the first device for reception and/or transmission in the target capability mode. In some embodiments, the target capability operating bandwidth subfield may occupy 4 bits, which, however, is not limited in the embodiments of the present disclosure, and the target capability operating bandwidth subfield may occupy another number of bits. The encoding manner for the target capability operating bandwidth subfield may not be limited in the embodiments of the present disclosure. For example, the following encoding manner may be used for the target capability operating bandwidth subfield, in which: the target capability operating bandwidth subfield is set to be 0 for 20 MHz, the target capability operating bandwidth subfield is set to be 1 for 40 MHz; the target capability operating bandwidth subfield is set to be 2 for 80 MHz; the target capability operating bandwidth subfield is set to be 3 for 160 MHz and 80+80 MHz; the target capability operating bandwidth subfield is set to be 4 for 320 MHz; and other values are reserved. For another example, the following encoding manner may be used for the target capability operating bandwidth subfield, in which: the target capability operating bandwidth subfield is set to be 0 for 20 MHz; the target capability operating bandwidth subfield is set to be 1 for 40 MHz; the target capability operating bandwidth subfield is set to be 2 for 80 MHz; the target capability operating bandwidth subfield is set to be 3 for 160 MHz; the target capability operating bandwidth subfield is set to be 4 for 80+80 MHz; the target capability operating bandwidth subfield is set to be 5 for 320 MHz; and other values are reserved.

The MCS index subfield corresponding to the target capability supported highest-order modulation may be used to indicate an MCS index corresponding to the highest-order modulation supported by the first device in the target capability mode. In some embodiments, the MCS index subfield corresponding to the target capability supported highest-order modulation may occupy 3 bits, which, however, is not limited in the embodiments of the present disclosure, and the MCS index subfield corresponding to the target capability supported highest-order modulation may occupy another number of bits. The encoding manner for the MCS index subfield corresponding to the target capability supported highest-order modulation may not be limited in the embodiments of the present disclosure. For example, the following encoding manner may be used for the MCS index subfield corresponding to the target capability supported highest-order modulation, in which: the MCS index subfield corresponding to the target capability supported highest-order modulation is set to be 0 for the BPSK, the MCS index subfield corresponding to the target capability supported highest-order modulation is set to be 1 for the QPSK, the MCS index subfield corresponding to the target capability supported highest-order modulation is set to be 2 for the 16-QAM, ..., the MCS index subfield corresponding to the target capability supported highest-order modulation is set to be 6 for the 2048-QAM, and the MCS index subfield corresponding to the target capability supported highest-order modulation is set to be 7 for the 4096-QAM. For another example, the following encoding manner may be used for the MCS index subfield corresponding to the target capability supported highest-order modulation, in which: the MCS index subfield corresponding to the target capability supported highest-order modulation is set to be 0 for the QPSK, the MCS index subfield corresponding to the target capability supported highest-order modulation is set to be 1 for the BPSK, the MCS index subfield corresponding to the target capability supported highest-order modulation is set to be 2 for the 16-QAM, ..., the MCS index subfield corresponding to the target capability supported highest-order modulation is set to be 6 for the 2048-QAM, and the MCS index subfield corresponding to the target capability supported highest-order modulation is set to be 7 for the 4096-QAM.

The target capability Rx NSS subfield may be used to indicate the maximum NSS for the reception supported by the first device in the target capability mode. As a possible implementation, the value of the target capability Rx NSS may be set to be NSS minus 1. In some embodiments, the target capability Rx NSS subfield may occupy 4 bits, which, however, is not limited in the embodiments of the present disclosure, and the target capability Rx NSS subfield may occupy another number of bits.

The target capability Tx NSTS subfield may be used to indicate the maximum NSTS for the transmission supported by the first device in the target capability mode. As a possible implementation, the value of the target capability Tx NSTS may be set to be NSTS minus 1. In some embodiments, the target capability Tx NSTS subfield may occupy 4 bits, which, however, is not limited in the embodiments of the present disclosure, and the target capability Tx NSTS subfield may occupy another number of bits.

The target capability supported PPDU format subfield may be used to indicate a PPDU format supported to be received and/or transmitted by the first device in the target capability mode. In some embodiments, the target capability supported PPDU format subfield may occupy 3 bits, which, however, is not limited in the embodiments of the present disclosure, and the target capability supported PPDU format subfield may occupy another number of bits. The encoding manner for the target capability supported PPDU format subfield may not be limited in the embodiments of the present disclosure. The related description of the encoding manner for the target capability supported PPDU format subfield may be referred to the aforementioned related description in Table 2.

The foregoing described that the third subfield may be carried in the second frame to indicate the switching information requested by the second device. However, the embodiments of the present disclosure are not limited thereto. For example, the second frame may be a control frame with dynamic control for the capability adaptation power save mode, to indicate the switching information requested by the second device through the control frame. The following provides the contents related to the second frame that is the control frame with the dynamic control for the capability adaptation power save mode.

In some embodiments, in a case that the first device is in the first operating mode, when initiating or performing the communication with the first device, the second device may request, through the control frame with the dynamic control for the capability adaptation power save mode, the first device to switch from the low capability mode to the high capability mode (or the full capability mode) in the current frame switching sequence.

In some embodiments, the control frame with the dynamic control for the capability adaptation power save mode may be extended and defined on the basis of the MU-RTS trigger frame or the basic trigger frame defined in the existing standard IEEE 802.11be.

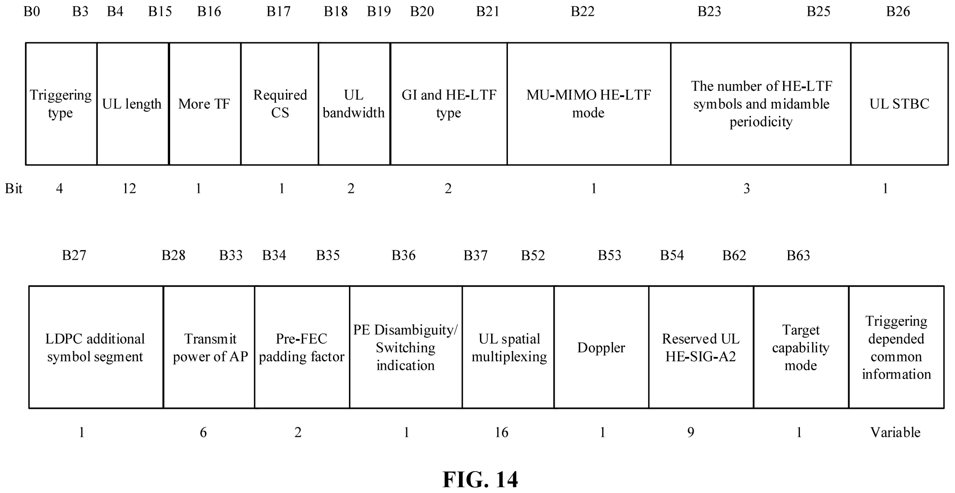

As an implementation, the control frame with the dynamic control for the capability adaptation power save mode may be extended and defined on the basis of the MU-RTS trigger frame. For example, definitions of a switching indication subfield and a target capability mode subfield may be added in a common information field (Common Info field) of the MU-RTS trigger frame. A possible implementation is provided below in combination with FIG. 14.

The switching indication subfield may be used to indicate whether the first device transitions from the low capability mode to the high capability mode (or the full capability mode) in the current frame switching sequence. In some embodiments, the switching indication subfield may occupy 1 bit. As an implementation, when the value of the switching indication subfield is 1, it may be represented that the first device transitions from the low capability mode to the high capability mode (or the full capability mode) in the current frame switching sequence; and when the value of the switching indication subfield is 0, it may be represented that the switching is not required. As another implementation, when the value of the switching indication subfield is 0, it may be represented that the first device transitions from the low capability mode to the high capability mode (or the full capability mode) in the current frame switching sequence; and when the value of the switching indication subfield is 1, it may be represented that the switching is not required. However, the embodiments of the present disclosure are not limited thereto. For example, the switching indication subfield may occupy multiple bits to indicate whether to switch from the low capability mode to the high capability mode (or the full capability mode) in the current frame switching sequence.

As an implementation, as illustrated in FIG. 14, the switching indication subfield may occupy 1 bit, For example, the switching indication subfield may be included at the B36 bit in the common information field of the MU-RTS trigger frame.

The target capability mode subfield may be used to indicate whether the switched target capability mode is the high capability mode or the full capability mode. In some embodiments, the target capability mode subfield may occupy 2 bits. However, the embodiments of the present disclosure are not limited thereto. For example, the target capability mode subfield may occupy another number of bits. An encoding manner for the target capability mode subfield may not be limited in the embodiments of the present disclosure. As an implementation, when the value of the target capability mode subfield is 0, the target capability mode may be indicated to be the high capability mode; when the value of target capability mode subfield is 1, the target capability mode may be indicated to be the full capability mode; and when the value of the target capability mode subfield is 2, the operating parameter(s) associated with the target capability mode may be indicated by the target capability mode operating parameter subfield carried in the capability adaptation power save mode switching control subfield.

As an implementation, as illustrated in FIG. 14, the target capability mode subfield may occupy 1 bit. For example, the target capability mode subfield may be included at the B63 bit in the common information field of the MU-RTS trigger frame.

The definitions of other subfields in FIG. 14 may be referred to the description of the prior technologies. For brevity, details are not described herein again.

Hereinafter, the capability adaptation power save mode switching response subfield is described.

In some embodiments, the capability adaptation power save mode switching response subfield may be carried in the response frame of the second frame. For example, the capability adaptation power save mode switching response subfield may be carried in a block acknowledgement frame. Alternatively, the capability adaptation power save mode switching response subfield may be carried in a response frame of the trigger frame.

In some embodiments, after receiving the second frame (e.g., the second frame contains the third subfield), the first device may indicate, by carrying the capability adaptation power save mode switching response subfield in the response frame of the second frame, whether to receive the capability adaptation power save mode switching information that is indicated or requested by the second device.

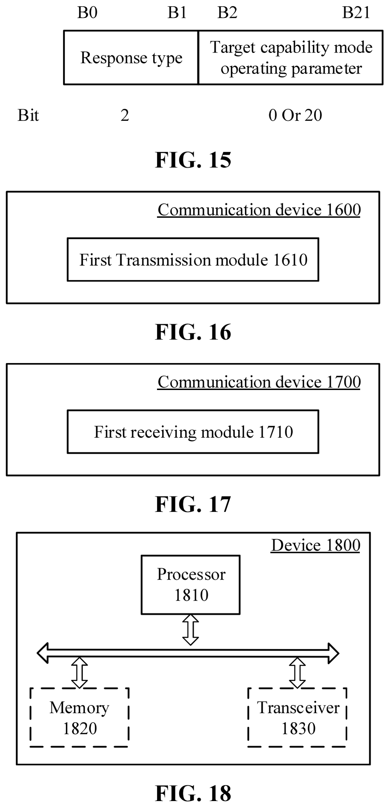

FIG. 15 illustrates an example diagram of a possible format of the capability adaptation power save mode switching response subfield. As illustrated in FIG. 15, the capability adaptation power save mode switching response subfield may include one or more of the following subfields: a response type subfield and a target capability mode operating parameter subfield.

The response type subfield may be used to indicate whether the first device accepts the request from the second device, or, indicate whether the first device accepts the switching request of the first operating mode from the second device. It is to be noted that the request from the second device or the switching request of the first operating mode from the second device may be carried in the second frame, such as, carried in the capability adaptation power save mode switching control subfield of the second frame.

In some embodiments, the response type subfield may occupy 2 bits, which, however, is not limited in the embodiments of the present disclosure, and for example, the response type subfield may occupy another number of bits.

The encoding manner for the response type subfield may not be limited in the embodiments of the present disclosure. A possible encoding manner is provided below in combination with Table 5.

**Table 5**

| Encoding of the response type subfield | Definition of the response type subfield |
|---|---|
| 0 | Accepting the switching request |
| 1 | Rejecting the switching request and maintaining the current low capability mode |
| 2 | Accepting the switching request, but switching to the target capability mode as indicated by the target capability mode operating parameter subfield |
| 3 | Reserved |

As illustrated in Table 5, the response type subfield is set to be 0 as indicative of accepting the switching request, the response type subfield is set to be 1 as indicative of rejecting the switching request and maintaining the current low capability mode, the response type subfield is set to be 2 as indicative of accepting the switching request but switching to the target capability mode as indicated by the target capability mode operating parameter subfield; and others values are reserved. However, the embodiments of the present disclosure are not limited thereto. For example, the response type subfield may be set to be 0 as indicative of rejecting the switching request and maintaining the current low capability mode, the response type subfield may be set to be 1 as indicative of accepting the switching request but switching to the target capability mode as indicated by the target capability mode operating parameter subfield, the response type subfield may be set to be 2 as indicative of accepting the switching request; and other values are reserved.

In some embodiments, when the response type subfield indicates "accepting the switching request, but switching to the target capability mode as indicated by the target capability mode operating parameter subfield" (see the encoding of 2 shown in the table), the capability adaptation power save mode switching response subfield may carry the target capability mode operating parameter subfield. Herein, the target capability mode operating parameter subfield may indicate the operating parameter(s) associated with the high capability mode that the first device is about to enter. The description related to the target capability mode operating parameter subfield may be referred to the aforementioned related description of FIG. 13.

The method embodiments of the present disclosure are described in detail above, and device embodiments of the present disclosure are described in detail below. It is to be understood that the description of the method embodiments may correspond to the description of the device embodiments, and therefore, the portions not described in detail in the device embodiments may refer to the foregoing method embodiments.

FIG. 16 is a schematic structural diagram of a communication device 1600 according to an embodiment of the present disclosure. The communication device 1600 illustrated in FIG. 16 may be any one of the aforementioned first devices. The communication device 1600 may include a first transmission module 1610. The first transmission module 1610 may be configured to transmit a first frame to a second device, where the first frame includes first information, the first information is associated with a first operating mode of the first device, and the first operating mode allows the first device, in an awake state, to perform communication in different capability modes.

In the embodiment of the present disclosure, the aforementioned communication device 1600 may be used to perform some or all of the operations in each of the methods performed by the first device in the aforementioned method embodiments. For example, when the first device is the initiator, the communication device 1600 may be configured to perform some or all of the operations in each of the methods performed by the initiator in the aforementioned solutions in connection with FIGS. 2 to 15. The communication device 1600 includes units or modules configured to perform the operations in each of the methods corresponding to aforementioned FIGS. 2 to 15. The method flow(s) have been described in detail in the foregoing embodiments, and the module(s) in the embodiment may have or perform the same functions, details are not described herein again. However, those skilled in the art should know that the text description corresponding to aforementioned FIGS. 2 to 15 may be introduced into the embodiment to correspond to the module(s) in the communication device 1600.

In some embodiments, the first transmission module 1610 may be a transceiver 1830. The communication device 1600 may also include a processor 1810 and a memory 1820, as specifically illustrated in FIG. 18.

FIG. 17 is a schematic structural diagram of another communication device 1700 according to an embodiment of the present disclosure. The communication device 1700 illustrated in FIG. 17 may be any one of the aforementioned second devices. The communication device 1700 may include a first receiving module 1710. The first receiving module 1710 may be configured to receive a first frame from a first device, where the first frame includes first information, the first information is associated with a first operating mode of the first device, and the first operating mode allows the first device, in an awake state, to perform communication in different capability modes.

In the embodiment of the present disclosure, the aforementioned communication device 1700 may be used to perform some or all of the operations in each of the methods performed by the second device in the aforementioned method embodiments. For example, when the second device is the responder, the communication device 1700 may be configured to perform some or all of the operations in each of the methods performed by the responder in the aforementioned solutions in connection with FIGS. 2 to 15. The communication device 1700 includes units or modules configured to perform the operations in each of the methods corresponding to aforementioned FIGS. 2 to 15. The method flow(s) have been described in detail in the foregoing embodiments, and the module(s) in the embodiment may have or perform the same functions, details are not described herein again. However, those skilled in the art should know that the text description corresponding to aforementioned FIGS. 2 to 15 may be introduced into the embodiment to correspond to the module(s) in the communication device 1700.

In some embodiments, the first receiving module 1710 may be a transceiver 1830. The communication device 1700 may also include a processor 1810 and a memory 1820, as specifically illustrated in FIG. 18.

FIG. 18 is a schematic structural diagram of a device for communication according to an embodiment of the present disclosure. The dashed line in FIG. 18 represents that the units or modules may be optional. The device 1800 may be configured to implement each of the methods described in the aforementioned method embodiments. The device 1800 may be a chip or a communication device.

The device 1800 may include one or more processors 1810. The processor 1810 may support the device 1800 to implement each of the methods described in the aforementioned method embodiments. The processor 1810 may be a general-purpose processor or a special-purpose processor. For example, the processor may be a Central Processing Unit (CPU). Alternatively, the processor may also be another general purpose processor, a Digital Signal Processor (DSP), an Application Specific Integrated Circuit (ASIC), a Field Programmable Gate Array (FPGA) or another programmable logic device, a discrete gate or transistor logic device, a discrete hardware component, or the like. The general purpose processor may be a microprocessor or the processor may be any conventional processor or the like.

The device 1800 may also include one or more memories 1820. The memory 1820 has stored a program that is executable by the processor 1810 to cause the processor 1810 to perform each of the methods described in the aforementioned method embodiments. The memory 1820 may be independent of the processor 1810 or may be integrated in the processor 1810.

The device 1800 may also include a transceiver 1830. The processor 1810 may communicate with other devices or chips through the transceiver 1830. For example, through the transceiver 1830, the processor 1810 may send data to other devices or chips, and receive data from other devices or chips.

An embodiment of the present disclosure further provides a computer-readable storage medium, which is configured to store a computer program. The computer-readable storage medium may be applied to the communication device in the embodiments of the present disclosure, and the computer program causes a computer to perform each of the methods performed by the communication device in various embodiments of the present disclosure.

An embodiment of the present disclosure further provides a computer program product, which includes programs. The computer program product may be applied to the communication device in the embodiments of the present disclosure, and the programs cause a computer to perform each of the methods performed by the communication device in various embodiments of the present disclosure.

An embodiment of the present disclosure further provides a computer program. The computer program may be applied to the communication device in the embodiments of the present disclosure, and the computer program causes a computer to perform each of the methods performed by the communication device in various embodiments of the present disclosure.

It is to be understood that the terms "system" and "network" are often used interchangeably herein. In addition, the terms used in the embodiments of the present disclosure are used only for explanation of specific embodiments of the present disclosure, and the terms are not intended to limit the present disclosure. The terms "first", "second", "third", "fourth" and the like in the description and claims of the present disclosure and the accompanying drawings are used to distinguish different objects and are not used to describe a particular sequence. Furthermore, the terms "including" and "having" and any variations thereof are intended to cover non-exclusive inclusion.

In the embodiments of the present disclosure, the term "field" may also be referred to as a "field(s)", a "sub-field(s)", or a "subfield(s)". One field may occupy one or more bytes (octets), or, one field may occupy one or more bits.

In the embodiments of the present disclosure, the reference to "indication" may be a direct indication, may be an indirect indication, or may be indicative of an association. For example, A indicates B, which may mean that A directly indicates B, e.g., B may be obtained through A; which may also mean that A indirectly indicates B, e.g., A indicates C, and B may be obtained by C; and which may further indicate that there is an association between A and B.

In the embodiments of the present disclosure, the expression "B corresponding to A" means that B is associated with A, and B may be determined based on A. However, it is also to be understood that determining B based on A does not mean that B is determined based on A alone, but that B may also be determined based on A and/or other information.

In the embodiments of the present disclosure, the term "correspondence" may mean that there is a direct correspondence or an indirect correspondence between the two, may also mean that there is an association relationship between the two, and may also be a relationship between indication and being indicated, configuration and being configured, etc.

In the embodiments of the present disclosure, the term "predefined" or "preconfigured" may be implemented by pre-storing corresponding codes, tables or other means used for indicating relevant information in devices (e.g., including the AP and the STA), and the present disclosure is not limited to the specific implementation thereof. For example, the predefined may refer to what is defined in the protocol.

In the embodiments of the present disclosure, the term "and/or" is only to describe an association relationship between associated objects and represents that three kinds of relationships may exist. For example, A and/or B may represent three conditions: i.e., independent existence of A, existence of both A and B as well as independent existence of B. In addition, the character "/" in the present disclosure generally indicates that the associated objects before and after the character is in an "or" relationship.

In the embodiments of the present disclosure, the term "including" may refer to direct inclusion or indirect inclusion. Alternatively, the reference to "including" in the embodiments of the present disclosure may be replaced with "indicating" or "used to determine". For example, A includes B, which may be replaced with that A indicates B, or A is used to determine B.

In various embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

In the embodiments of the present disclosure, the term "protocol" may refer to a standard protocol in the field of communications, and may include, for example, a WiFi protocol and related protocols applied to a future WiFi communication system, which is not limited in the present disclosure.

In the several embodiments provided in the present disclosure, it should be understood that the disclosed system, devices, and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the present disclosure may be integrated into one processing unit, or each of the units may be physically separated, or two or more units may be integrated into one unit.

The aforementioned embodiments may be implemented in whole or in part by software, hardware, firmware or any combination thereof. When implemented in software, the aforementioned embodiments may be implemented in whole or in part in the form of a computer program product. The computer program product includes one or more computer instructions. When the computer program instructions are loaded and executed on a computer, the flows or functions may be generated in whole or in part according to the embodiments of the present disclosure. The computer may be a general purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one Web site, computer, server, or data center to another Web site, computer, server, or data center in a wired (e.g., coaxial cable, optical fiber, digital subscriber line (DSL)) manner or a wireless (e.g., infrared, wireless, microwave, etc.) manner. The computer-readable storage medium may be any available medium that a computer may access or may be a data storage device such as a server, a data center, or the like that is integrated with one or more available media. The available medium may be a magnetic medium (e.g., floppy disk, hard disk, magnetic tape), an optical medium (e.g., digital video disc (DVD)), or a semiconductor medium (e.g., solid state disk (SSD)), etc.

The foregoing descriptions are merely specific implementations of the present disclosure, but are not intended to limit the scope of protection of the present disclosure. Any variation or replacement readily figured out by those skilled in the art within the technical scope disclosed in the present disclosure shall fall within the scope of protection of the present disclosure. Therefore, the scope of protection of the present disclosure shall be subject to the scope of protection of the claims.

## Claims

1. A method for wireless communication, comprising:
transmitting, by a first device, a first frame to a second device, wherein the first frame comprises first information, the first information is associated with a first operating mode of the first device, and the first operating mode allows the first device, in an awake state, to perform communication in different capability modes.

2. The method of claim 1, wherein the first frame comprises a control field, and the first information is carried in the control field.

3. The method of claim 1 or 2, wherein the first frame comprises one or more of the following: a Quality of Service (QoS) data frame, a QoS null frame, and a management frame.

4. The method of any one of claims 1 to 3, wherein the first information is used to indicate one or more of the following:
enabling/disabling the first operating mode;
an operating parameter associated with the first operating mode; and
a switching manner between the different capability modes of the first device in the awake state;
wherein the operating parameter associated with the first operating mode comprises one or more of the following: an operating parameter associated with a low capability mode, an operating parameter associated with a high capability mode, a latency parameter for switching between the different capability modes, a mode index corresponding to the low capability mode, and a mode index corresponding to the high capability mode.

5. The method of claim 4, wherein the switching manner between the different capability modes comprises a switching manner from the low capability mode to the high capability mode.

6. The method of claim 4 or 5, wherein the switching manner between the different capability modes is determined based on a type of the first operating mode.

7. The method of claim 6, wherein the type of the first operating mode comprises one or more of the following: a static first operating mode, a default operation-based first operating mode, a forced control-based first operating mode, and a negotiated control-based first operating mode.

8. The method of claim 6 or 7, wherein the type of the first operating mode is a static first operating mode, and the first device maintains the low capability mode for frame switching.

9. The method of any one of claims 1 to 8, further comprising:
receiving, by the first device in a low capability mode, a second frame from the second device; and
transmitting, by the first device, a response frame of the second frame to the second device;
wherein the second frame comprises second information and/or third information, the second information is used to request the first device to switch to a high capability mode, the third information is used to indicate an operating parameter associated with the high capability mode to which the first device is requested to switch, and the response frame is used to indicate one or more of the following: whether the first device switches based on the second information, and an operating parameter associated with a target capability mode to which the first device switches.

10. The method of claim 9, further comprising:
if the response frame indicates that the first device switches based on the second information, switching, by the first device, to the high capability mode for frame switching in a current frame switching sequence; and/or
if the response frame indicates that the first device does not switch based on the second information, maintaining, by the first device, the low capability mode for the frame switching in the current frame switching sequence.

11. The method of claim 9 or 10, wherein the response frame comprises one or more of the following: a block acknowledgement frame, and a response frame of a trigger frame.

12. The method of any one of claims 1 to 8, further comprising:
receiving, by the first device in a low capability mode, a second frame from the second device, wherein the second frame comprises fourth information, and the fourth information is used to indicate whether the first device switches to a high capability mode;
if the fourth information indicates that the first device switches to the high capability mode, switching, by the first device, to the high capability mode for frame switching in a current frame switching sequence; and/or
if the fourth information indicates that the first device does not switch to the high capability mode, maintaining, by the first device, the low capability mode for the frame switching in the current frame switching sequence.

13. The method of any one of claims 1 to 8, further comprising:
receiving, by the first device, a second frame from the second device, wherein the second frame is used to instruct the first device to perform frame switching, and the second frame is received based on one or more of the following: an operating parameter associated with a low capability mode, and an operating parameter associated with the low capability mode indicated by the first frame; and
switching, by the first device, to a high capability mode for the frame switching in a current frame switching sequence.

14. The method of any one of claims 9 to 13, further comprising:
if the first device switches to the high capability mode for frame switching, switching, by the first device, back to the low capability mode, after switching of a current frame switching sequence is completed.

15. The method of any one of claims 9 to 14, wherein the second frame is transmitted by using a Physical Layer Protocol Data Unit (PPDU) that satisfies the low capability mode of the first device.

16. The method of any one of claims 9 to 15, wherein the second frame comprises an initial frame and/or a trigger frame.

17. The method of any one of claims 1 to 16, wherein
an operating parameter associated with a low capability mode in the first operating mode comprises one or more of the following: an operating bandwidth in the low capability mode, a number of receive chains in the low capability mode, a modulation parameter of a Modulation and Coding Scheme (MCS) in the low capability mode, a number of receivable space-time/spatial streams in the low capability mode, a number of transmissible space-time/spatial streams in the low capability mode, a data rate in the low capability mode, and a PPDU format that is supported to be received in the low capability mode; and
an operating parameter associated with a high capability mode in the first operating mode comprises one or more of the following: an operating bandwidth in the high capability mode, a number of receive chains in the high capability mode, a modulation parameter of an MCS in the high capability mode, a number of receivable space-time/spatial streams in the high capability mode, a number of transmissible space-time/spatial streams in the high capability mode, a data rate in the high capability mode, and a PPDU format that is supported to be received in the high capability mode.

18. The method of any one of claims 1 to 17, wherein an operating parameter associated with the first operating mode comprises a latency parameter for switching between the different capability modes, and the latency parameter for switching between the different capability modes comprises one or more of the following:
a minimum latency required for switching from a low capability mode to a high capability mode, and
a minimum latency required for switching from the high capability mode to the low capability mode.

19. The method of any one of claims 1 to 18, further comprising:
adjusting, by the first device based on the first information, an operating parameter associated with the first operating mode,
wherein the operating parameter associated with the first operating mode is effective after a transmission opportunity in which the first device receives acknowledgement information for the first frame from the second device; or, the operating parameter associated with the first operating mode is effective after a transmission opportunity in which the first device expects to receive the acknowledgement information for the first frame from the second device.

20. The method of claim 19, wherein the operating parameter associated with the first operating mode is effective after the transmission opportunity in which the first device receives the acknowledgement information for the first frame from the second device, when one or more of the following conditions are satisfied:
enabling the first operating mode;
decreasing the operating parameter associated with the first operating mode; and
increasing a latency parameter for switching between the different capability modes.

21. The method of any one of claims 1 to 20, wherein a control field of the first frame comprises a first subfield, the first subfield is used to indicate a mode index and an operating parameter associated with the mode index, and the mode index is used to identify different capability modes comprised in the first operating mode.

22. The method of any one of claims 1 to 21, wherein a control field of the first frame comprises a second subfield, the second subfield is used to indicate one or more of the following: enabling/disabling the first operating mode, a latency parameter for switching between the different capability modes, and an operating parameter associated with the first operating mode.

23. The method of claim 22, wherein the operating parameter associated with the first operating mode is indicated by a mode index.

24. The method of any one of claims 1 to 23, wherein the first device has one or more receive chains.

25. The method of any one of claims 1 to 24, wherein the first device is a station device and the second device is the station device or an access point device; or, the first device is the access point device and the second device is the station device or the access point device.

26. A method for wireless communication, comprising:
receiving, by a second device, a first frame from a first device, wherein the first frame comprises first information, the first information is associated with a first operating mode of the first device, and the first operating mode allows the first device, in an awake state, to perform communication in different capability modes.

27. The method of claim 26, wherein the first frame comprises a control field, and the first information is carried in the control field.

28. The method of claim 26 or 27, wherein the first frame comprises one or more of the following: a Quality of Service (QoS) data frame, a QoS null frame, and a management frame.

29. The method of any one of claims 26 to 28, wherein the first information is used to indicate one or more of the following:
enabling/disabling the first operating mode;
an operating parameter associated with the first operating mode; and
a switching manner between the different capability modes of the first device in the awake state;
wherein the operating parameter associated with the first operating mode comprises one or more of the following: an operating parameter associated with a low capability mode, an operating parameter associated with a high capability mode, a latency parameter for switching between the different capability modes, a mode index corresponding to the low capability mode, and a mode index corresponding to the high capability mode.

30. The method of claim 29, wherein the switching manner between the different capability modes comprises a switching manner from the low capability mode to the high capability mode.

31. The method of claim 29 or 30, wherein the switching manner between the different capability modes is determined based on a type of the first operating mode.

32. The method of claim 31, wherein the type of the first operating mode comprises one or more of the following: a static first operating mode, a default operation-based first operating mode, a forced control-based first operating mode, and a negotiated control-based first operating mode.

33. The method of claim 31 or 32, wherein the type of the first operating mode is a static first operating mode, and the first device maintains the low capability mode for frame switching.

34. The method of any one of claims 26 to 33, further comprising:
transmitting, by the second device, a second frame to the first device;
receiving, by the second device, a response frame of the second frame from the first device;
wherein the second frame comprises second information and/or third information, the second information is used to request the first device to switch to a high capability mode, the third information is used to indicate the operating parameter associated with the high capability mode to which the first device is requested to switch, and the response frame is used to indicate one or more of the following: whether the first device switches based on the second information, and an operating parameter associated with a target capability mode to which the first device switches.

35. The method of claim 34, wherein the response frame comprises one or more of the following: a block acknowledgement frame, and a response frame of a trigger frame.

36. The method of any one of claims 26 to 33, further comprising:
transmitting, by the second device, a second frame to the first device, wherein the second frame comprises fourth information, and the fourth information is used to indicate whether the first device switches to a high capability mode.

37. The method of any one of claims 26 to 33, further comprising:
transmitting, by the second device, a second frame to the first device, wherein the second frame is used to instruct the first device to perform frame switching, and the second frame is received based on one or more of the following: an operating parameter associated with a low capability mode, and an operating parameter associated with the low capability mode indicated by the first frame.

38. The method of any one of claims 34 to 37, wherein the second frame is transmitted by using a Physical Layer Protocol Data Unit (PPDU) that satisfies the low capability mode of the first device.

39. The method of any one of claims 34 to 38, wherein the second frame comprises an initial frame and/or a trigger frame.

40. The method of any one of claims 26 to 39, further comprising:
updating, by the second device based on the first information, an operating parameter associated with the first operating mode of the first device;
performing, by the second device, communication with the first device based on the updated operating parameter.

41. The method of any one of claims 26 to 40, wherein
an operating parameter associated with a low capability mode in the first operating mode comprises one or more of the following: an operating bandwidth in the low capability mode, a number of receive chains in the low capability mode, a modulation parameter of a Modulation and Coding Scheme (MCS) in the low capability mode, a number of receivable space-time/spatial streams in the low capability mode, a number of transmissible space-time/spatial streams in the low capability mode, a data rate in the low capability mode, and a PPDU format that is supported to be received in the low capability mode; and
an operating parameter associated with a high capability mode in the first operating mode comprises one or more of the following: an operating bandwidth in the high capability mode, a number of receive chains in the high capability mode, a modulation parameter of an MCS in the high capability mode, a number of receivable space-time/spatial streams in the high capability mode, a number of transmissible space-time/spatial streams in the high capability mode, a data rate in the high capability mode, and a PPDU format that is supported to be received in the high capability mode.

42. The method of any one of claims 26 to 41, wherein an operating parameter associated with the first operating mode comprises a latency parameter for switching between the different capability modes, and the latency parameter for switching between the different capability modes comprises one or more of the following:
a minimum latency required for switching from a low capability mode to a high capability mode, and
a minimum latency required for switching from the high capability mode to the low capability mode.

43. The method of any one of claims 26 to 42, wherein a control field of the first frame comprises a first subfield, the first subfield is used to indicate a mode index and an operating parameter associated with the mode index, and the mode index is used to identify different capability modes comprised in the first operating mode.

44. The method of any one of claims 26 to 43, wherein a control field of the first frame comprises a second subfield, the second subfield is used to indicate one or more of the following: enabling/disabling the first operating mode, a latency parameter for switching between the different capability modes, and an operating parameter associated with the first operating mode.

45. The method of claim 44, wherein the operating parameter associated with the first operating mode is indicated by a mode index.

46. The method of any one of claims 26 to 45, wherein the first device has one or more receive chains.

47. The method of any one of claims 26 to 46, wherein the first device is a station device and the second device is the station device or an access point device; or, the first device is the access point device and the second device is the station device or the access point device.

48. A communication device, wherein the communication device is a first device and comprises:
a first transmission module, configured to transmit a first frame to a second device, wherein the first frame comprises first information, the first information is associated with a first operating mode of the first device, and the first operating mode allows the first device, in an awake state, to perform communication in different capability modes.

49. The communication device of claim 48, wherein the first frame comprises a control field, and the first information is carried in the control field.

50. The communication device of claim 48 or 49, wherein the first frame comprises one or more of the following: a Quality of Service (QoS) data frame, a QoS null frame, and a management frame.

51. The communication device of any one of claims 48 to 50, wherein the first information is used to indicate one or more of the following:
enabling/disabling the first operating mode;
an operating parameter associated with the first operating mode; and
a switching manner between the different capability modes of the first device in the awake state;
wherein the operating parameter associated with the first operating mode comprises one or more of the following: an operating parameter associated with a low capability mode, an operating parameter associated with a high capability mode, a latency parameter for switching between the different capability modes, a mode index corresponding to the low capability mode, and a mode index corresponding to the high capability mode.

52. The communication device of claim 51, wherein the switching manner between the different capability modes comprises a switching manner from the low capability mode to the high capability mode.

53. The communication device of claim 51 or 52, wherein the switching manner between the different capability modes is determined based on a type of the first operating mode.

54. The communication device of claim 53, wherein the type of the first operating mode comprises one or more of the following: a static first operating mode, a default operation-based first operating mode, a forced control-based first operating mode, and a negotiated control-based first operating mode.

55. The communication device of claim 53 or 54, wherein the type of the first operating mode is a static first operating mode, and the first device maintains the low capability mode for frame switching.

56. The communication device of any one of claims 48 to 55, further comprising:
a first receiving module, configured to receive, in a low capability mode, a second frame from the second device; and
a second transmission module, configured to transmit a response frame of the second frame to the second device;
wherein the second frame comprises second information and/or third information, the second information is used to request the first device to switch to a high capability mode, the third information is used to indicate an operating parameter associated with the high capability mode to which the first device is requested to switch, and the response frame is used to indicate one or more of the following: whether the first device switches based on the second information, and an operating parameter associated with a target capability mode to which the first device switches.

57. The communication device of claim 56, further comprising a first communication module, wherein the first communication module is configured to:
if the response frame indicates that the first device switches based on the second information, switch to the high capability mode for frame switching in a current frame switching sequence; and/or
if the response frame indicates that the first device does not switch based on the second information, maintain the low capability mode for the frame switching in the current frame switching sequence.

58. The communication device of claim 56 or 57, wherein the response frame comprises one or more of the following: a block acknowledgement frame, and a response frame of a trigger frame.

59. The communication device of any one of claims 48 to 55, further comprising:
a second receiving module, configured to receive, in a low capability mode, a second frame from the second device, wherein the second frame comprises fourth information, and the fourth information is used to indicate whether the first device switches to a high capability mode;
a second communication module, configured to: if the fourth information indicates that the first device switches to the high capability mode, switch to the high capability mode for frame switching in a current frame switching sequence; and/or, if the fourth information indicates that the first device does not switch to the high capability mode, maintain the low capability mode for the frame switching in the current frame switching sequence.

60. The communication device of any one of claims 48 to 55, further comprising:
a third receiving module, configured to receive a second frame from the second device, wherein the second frame is used to instruct the first device to perform frame switching, and the second frame is received based on one or more of the following: an operating parameter associated with a low capability mode, and an operating parameter associated with the low capability mode indicated by the first frame; and
a third communication module, configured to switch to a high capability mode for the frame switching in a current frame switching sequence.

61. The communication device of any one of claims 56 to 60, wherein the communication device further comprises:
a switching module configured to: if the first device switches to the high capability mode for frame switching, switch back to the low capability mode, after switching of a current frame switching sequence is completed.

62. The communication device of any one of claims 56 to 61, wherein the second frame is transmitted by using a Physical Layer Protocol Data Unit (PPDU) that satisfies the low capability mode of the first device.

63. The communication device of any one of claims 56 to 62, wherein the second frame comprises an initial frame and/or a trigger frame.

64. The communication device of any one of claims 48 to 63, wherein
an operating parameter associated with a low capability mode in the first operating mode comprises one or more of the following: an operating bandwidth in the low capability mode, a number of receive chains in the low capability mode, a modulation parameter of a Modulation and Coding Scheme (MCS) in the low capability mode, a number of receivable space-time/spatial streams in the low capability mode, a number of transmissible space-time/spatial streams in the low capability mode, a data rate in the low capability mode, and a PPDU format that is supported to be received in the low capability mode; and
an operating parameter associated with a high capability mode in the first operating mode comprises one or more of the following: an operating bandwidth in the high capability mode, a number of receive chains in the high capability mode, a modulation parameter of an MCS in the high capability mode, a number of receivable space-time/spatial streams in the high capability mode, a number of transmissible space-time/spatial streams in the high capability mode, a data rate in the high capability mode, and a PPDU format that is supported to be received in the high capability mode.

65. The communication device of any one of claims 48 to 64, wherein an operating parameter associated with the first operating mode comprises a latency parameter for switching between the different capability modes, and the latency parameter for switching between the different capability modes comprises one or more of the following:
a minimum latency required for switching from a low capability mode to a high capability mode, and
a minimum latency required for switching from the high capability mode to the low capability mode.

66. The communication device of any one of claims 48 to 65, further comprising:
an adjustment module configured to adjust, based on the first information, an operating parameter associated with the first operating mode;
wherein the operating parameter associated with the first operating mode is effective after a transmission opportunity in which the first device receives acknowledgement information for the first frame from the second device; or, the operating parameter associated with the first operating mode is effective after a transmission opportunity in which the first device expects to receive the acknowledgement information for the first frame from the second device.

67. The communication device of claim 66, wherein the operating parameter associated with the first operating mode is effective after the transmission opportunity in which the first device receives the acknowledgement information for the first frame from the second device, when one or more of the following conditions are satisfied:
enabling the first operating mode;
decreasing the operating parameter associated with the first operating mode; and
increasing a latency parameter for switching between the different capability modes.

68. The communication device of any one of claims 48 to 67, wherein a control field of the first frame comprises a first subfield, the first subfield is used to indicate a mode index and an operating parameter associated with the mode index, and the mode index is used to identify different capability modes comprised in the first operating mode.

69. The communication device of any one of claims 48 to 68, wherein a control field of the first frame comprises a second subfield, the second subfield is used to indicate one or more of the following: enabling/disabling the first operating mode, a latency parameter for switching between different capability modes, and an operating parameter associated with the first operating mode.

70. The communication device of claim 69, wherein the operating parameter associated with the first operating mode is indicated by a mode index.

71. The communication device of any one of claims 48 to 70, wherein the first device has one or more receive chains.

72. The communication device of any one of claims 48 to 71, wherein the first device is a station device and the second device is the station device or an access point device; or, the first device is the access point device and the second device is the station device or the access point device.

73. A communication device, wherein the communication device is a second device and comprises:
a first receiving module, configured to receive a first frame from a first device, wherein the first frame comprises first information, the first information is associated with a first operating mode of the first device, and the first operating mode allows the first device, in an awake state, to perform communication in different capability modes.

74. The communication device of claim 73, wherein the first frame comprises a control field, and the first information is carried in the control field.

75. The communication device of claim 73 or 74, wherein the first frame comprises one or more of the following: a Quality of Service (QoS) data frame, a QoS null frame, and a management frame.

76. The communication device of any one of claims 73 to 75, wherein the first information is used to indicate one or more of the following:
enabling/disabling the first operating mode;
an operating parameter associated with the first operating mode; and
a switching manner between the different capability modes of the first device in the awake state;
wherein the operating parameter associated with the first operating mode comprises one or more of the following: an operating parameter associated with a low capability mode, an operating parameter associated with a high capability mode, a latency parameter for switching between the different capability modes, a mode index corresponding to the low capability mode, and a mode index corresponding to the high capability mode.

77. The communication device of claim 76, wherein the switching manner between the different capability modes comprises a switching manner from the low capability mode to the high capability mode.

78. The communication device of claim 76 or 77, wherein the switching manner between the different capability modes is determined based on a type of the first operating mode.

79. The communication device of claim 78, wherein the type of the first operating mode comprises one or more of the following: a static first operating mode, a default operation-based first operating mode, a forced control-based first operating mode, and a negotiated control-based first operating mode.

80. The communication device of claim 78 or 79, wherein the type of the first operating mode is a static first operating mode, and the first device maintains the low capability mode for frame switching.

81. The communication device of any one of claims 73 to 80, further comprising:
a first transmission module, configured to transmit a second frame to the first device;
a second receiving module, configured to receive a response frame of the second frame from the first device;
wherein the second frame comprises second information and/or third information, the second information is used to request the first device to switch to a high capability mode, the third information is used to indicate the operating parameter associated with the high capability mode to which the first device is requested to switch, and the response frame is used to indicate one or more of the following: whether the first device switches based on the second information, and an operating parameter associated with a target capability mode to which the first device switches.

82. The communication device of claim 81, wherein the response frame comprises one or more of the following: a block acknowledgement frame, and a response frame of a trigger frame.

83. The communication device of any one of claims 73 to 80, further comprising:
a second transmission module, configured to transmit a second frame to the first device, wherein the second frame comprises fourth information, and the fourth information is used to indicate whether the first device switches to a high capability mode.

84. The communication device of any one of claims 73 to 80, further comprising:
a third transmission module, configured to transmit a second frame to the first device, wherein the second frame is used to instruct the first device to perform frame switching, and the second frame is received based on one or more of the following: an operating parameter associated with a low capability mode, and an operating parameter associated with the low capability mode indicated by the first frame.

85. The communication device of any one of claims 81 to 84, wherein the second frame is transmitted by using a Physical Layer Protocol Data Unit (PPDU) that satisfies the low capability mode of the first device.

86. The communication device of any one of claims 81 to 85, wherein the second frame comprises an initial frame and/or a trigger frame.

87. The communication device of any one of claims 73 to 86, further comprising:
an updating module, configured to update, based on the first information, an operating parameter associated with the first operating mode of the first device;
a communication module, configured to perform communication with the first device based on the updated operating parameter.

88. The communication device of any one of claims 73 to 87, wherein
an operating parameter associated with a low capability mode in the first operating mode comprises one or more of the following: an operating bandwidth in the low capability mode, a number of receive chains in the low capability mode, a modulation parameter of a Modulation and Coding Scheme (MCS) in the low capability mode, a number of receivable space-time/spatial streams in the low capability mode, a number of transmissible space-time/spatial streams in the low capability mode, a data rate in the low capability mode, and a PPDU format that is supported to be received in the low capability mode; and
an operating parameter associated with a high capability mode in the first operating mode comprises one or more of the following: an operating bandwidth in the high capability mode, a number of receive chains in the high capability mode, a modulation parameter of an MCS in the high capability mode, a number of receivable space-time/spatial streams in the high capability mode, a number of transmissible space-time/spatial streams in the high capability mode, a data rate in the high capability mode, and a PPDU format that is supported to be received in the high capability mode.

89. The communication device of any one of claims 73 to 88, wherein an operating parameter associated with the first operating mode comprises a latency parameter for switching between the different capability modes, and the latency parameter for switching between the different capability modes comprises one or more of the following:
a minimum latency required for switching from a low capability mode to a high capability mode, and
a minimum latency required for switching from the high capability mode to the low capability mode.

90. The communication device of any one of claims 73 to 89, wherein a control field of the first frame comprises a first subfield, the first subfield is used to indicate a mode index and an operating parameter associated with the mode index, and the mode index is used to identify different capability modes comprised in the first operating mode.

91. The communication device of any one of claims 73 to 90, wherein a control field of the first frame comprises a second subfield, the second subfield is used to indicate one or more of the following: enabling/disabling the first operating mode, a latency parameter for switching between different capability modes, and an operating parameter associated with the first operating mode.

92. The communication device of claim 91, wherein the operating parameter associated with the first operating mode is indicated by a mode index.

93. The communication device of any one of claims 73 to 92, wherein the first device has one or more receive chains.

94. The communication device of any one of claims 73 to 93, wherein the first device is a station device and the second device is the station device or an access point device; or, the first device is the access point device and the second device is the station device or the access point device.

95. A communication device comprising a transceiver, a memory and a processor, wherein the memory is configured to store a program, and the processor is configured to call the program in the memory to enable the communication device to perform the method of any one of claims 1-25 or the method of any one of claims 26-47.

96. A device comprising a processor configured to call a program from a memory to enable the device to perform the method of any one of claims 1-25 or the method of any one of claims 26-47.

97. A chip comprising: a processor configured to call a computer program from a memory, to enable a device on which the chip is mounted to perform the method of any one of claims 1 to 25, or the method of any one of claims 26-47.

98. A computer-readable storage medium configured to store a computer program, wherein the computer program causes a computer to perform the method of any one of claims 1 to 25, or the method of any one of claims 26-47.

99. A computer program product, comprising programs, wherein the programs cause a computer to perform the method of any one of claims 1 to 25, or the method of any one of claims 26-47.

100. A computer program, wherein the computer program causes a computer to perform the method of any one of claims 1 to 25, or the method of any one of claims 26-47.
